(19) Europäisches Patentamt
European Patent Office
Office européen des brevets

(11) **EP 4 432 657 A1**

(12) **EUROPEAN PATENT APPLICATION**
published in accordance with Art. 153(4) EPC

(43) Date of publication:
**18.09.2024 Bulletin 2024/38**

(21) Application number: **22893139.0**

(22) Date of filing: **08.11.2022**

(51) International Patent Classification (IPC):
*H04N 19/597* (2014.01)    *H04N 19/54* (2014.01)
*H04N 19/96* (2014.01)    *H04N 19/44* (2014.01)
*H04N 19/107* (2014.01)    *H04N 19/70* (2014.01)

(52) Cooperative Patent Classification (CPC):
**H04N 19/107; H04N 19/44; H04N 19/54;**
**H04N 19/597; H04N 19/70; H04N 19/96**

(86) International application number:
**PCT/KR2022/017416**

(87) International publication number:
**WO 2023/085719 (19.05.2023 Gazette 2023/20)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **10.11.2021 KR 20210154126**

(71) Applicant: **LG Electronics Inc.**
**Yeongdeungpo-gu**
**Seoul 07336 (KR)**

(72) Inventors:
• **PARK, Yousun**
**Seoul 06772 (KR)**
• **HUR, Hyejung**
**Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(54) **POINT CLOUD DATA TRANSMISSION METHOD, POINT CLOUD DATA TRANSMISSION DEVICE, POINT CLOUD DATA RECEPTION METHOD, AND POINT CLOUD DATA RECEPTION DEVICE**

(57)    A point cloud data transmission method according to embodiments may comprise the steps of: encoding point cloud data; and transmitting a bitstream including the point cloud data. In addition, a point cloud data transmission device according to embodiments may comprise: an encoder which encodes point cloud data; and a transmitter which transmits a bitstream including the point cloud data.

FIG. 1

## Description

### TECHNICAL FIELD

Embodiments relate to a method and apparatus for processing point cloud content.

### BACKGROUND ART

Point cloud content is content represented by a point cloud, which is a set of points belonging to a coordinate system representing a three-dimensional space. The point cloud content may express media configured in three dimensions, and is used to provide various services such as virtual reality (VR), augmented reality (AR), mixed reality (MR), and self-driving services. However, tens of thousands to hundreds of thousands of point data are required to represent point cloud content. Therefore, there is a need for a method for efficiently processing a large amount of point data.

### DISCLOSURE

### Technical Problem

Embodiments provide an apparatus and method for efficiently processing point cloud data. Embodiments provide a point cloud data processing method and apparatus for addressing latency and encoding/decoding complexity.
The technical scope of the embodiments is not limited to the aforementioned technical objects, and may be extended to other technical objects that may be inferred by those skilled in the art based on the entire contents disclosed herein.

### Technical Solution

To achieve these objects and other advantages and in accordance with the purpose of the disclosure, as embodied and broadly described herein, a method for transmitting point cloud data may include encoding point cloud data, and transmitting a bitstream containing the point cloud data. In another aspect of the present disclosure, a method for receiving point cloud data may include receiving a bitstream including point cloud data, and decoding the point cloud data.

### Advantageous Effects

Apparatuses and methods according to embodiments may process point cloud data with high efficiency.
The apparatuses and methods according to the embodiments may provide a high-quality point cloud service.
The apparatuses and methods according to the embodiments may provide point cloud content for providing general-purpose services such as a VR service and a self-driving service.

### Brief Description of Drawings

The accompanying drawings, which are included to provide a further understanding of the disclosure and are incorporated in and constitute a part of this application, illustrate embodiment(s) of the disclosure and together with the description serve to explain the principle of the disclosure. For a better understanding of various embodiments described below, reference should be made to the description of the following embodiments in connection with the accompanying drawings. The same reference numbers will be used throughout the drawings to refer to the same or like parts. In the drawings:

FIG. 1 shows an exemplary point cloud content providing system according to embodiments;
FIG. 2 is a block diagram illustrating a point cloud content providing operation according to embodiments;
FIG. 3 illustrates an exemplary process of capturing a point cloud video according to embodiments;
FIG. 4 illustrates an exemplary point cloud encoder according to embodiments;
FIG. 5 shows an example of voxels according to embodiments;
FIG. 6 shows an example of an octree and occupancy code according to embodiments;
FIG. 7 shows an example of a neighbor node pattern according to embodiments;
FIG. 8 illustrates an example of point configuration in each LOD according to embodiments;
FIG. 9 illustrates an example of point configuration in each LOD according to embodiments;
FIG. 10 illustrates a point cloud decoder according to embodiments;

FIG. 11 illustrates a point cloud decoder according to embodiments;

FIG. 12 illustrates a transmission device according to embodiments;

FIG. 13 illustrates a reception device according to embodiments;

FIG. 14 illustrates an exemplary structure operable in connection with point cloud data transmission/reception methods/devices according to embodiments;

FIG. 15 illustrates a predictive tree structure according to embodiments;

FIG. 16 illustrates inter-frame reference prediction according to embodiments;

FIG. 17 illustrates change of a predictive tree according to embodiments;

FIG. 18 illustrates an encoding process according to embodiments;

FIG. 19 illustrates a point cloud data transmission device/method according to embodiments;

FIG. 20 illustrates a point cloud data reception device/method according to embodiments;

FIG. 21 illustrates an encoded bitstream according to embodiments;

FIG. 22 illustrates a syntax of a sequence parameter set (seq_parameter_set) according to embodiments;

FIG. 23 illustrates a syntax of a tile parameter set (tile_parameter_set) according to embodiments;

FIG. 24 illustrates a syntax of a geometry parameter set (geometry_parameter_set) according to embodiments;

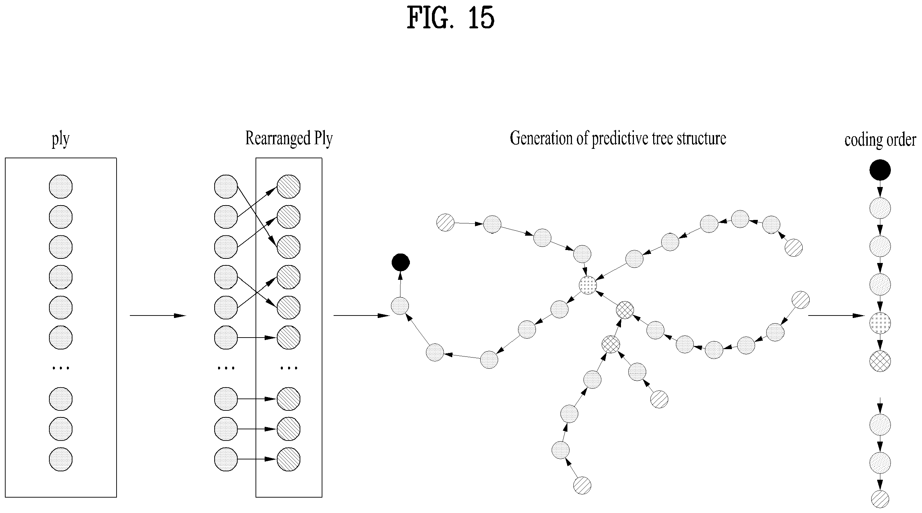

FIG. 15 illustrates a syntax of an attribute parameter set (attribute_parameter_set) according to embodiments;

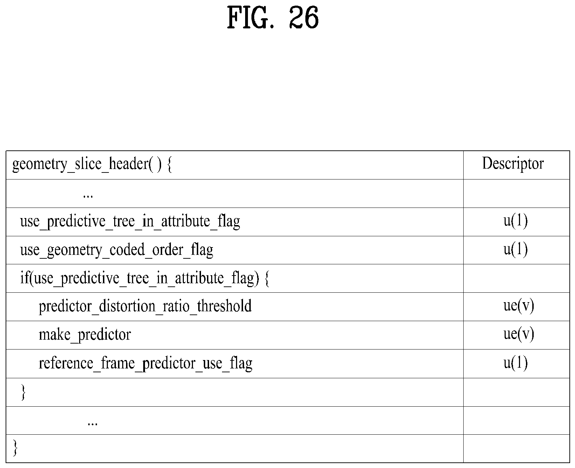

FIG. 26 illustrates a syntax of a geometry slice header;

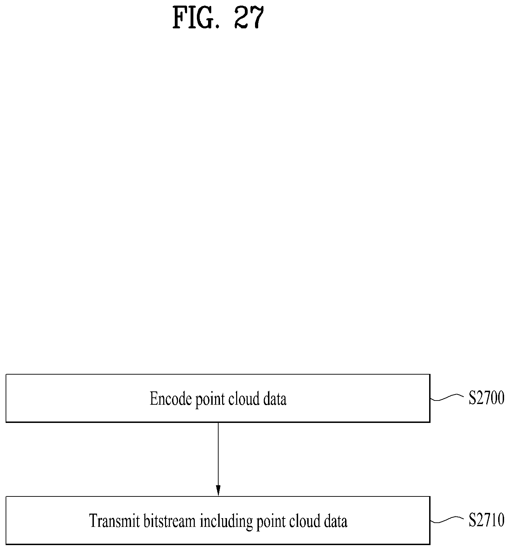

FIG. 27 illustrates a point cloud data transmission method according to embodiments; and

FIG. 27 illustrates a point cloud data reception method according to embodiments.

## BEST MODE

Reference will now be made in detail to the preferred embodiments of the present disclosure, examples of which are illustrated in the accompanying drawings. The detailed description, which will be given below with reference to the accompanying drawings, is intended to explain exemplary embodiments of the present disclosure, rather than to show the only embodiments that may be implemented according to the present disclosure. The following detailed description includes specific details in order to provide a thorough understanding of the present disclosure. However, it will be apparent to those skilled in the art that the present disclosure may be practiced without such specific details.

Although most terms used in the present disclosure have been selected from general ones widely used in the art, some terms have been arbitrarily selected by the applicant and their meanings are explained in detail in the following description as needed. Thus, the present disclosure should be understood based upon the intended meanings of the terms rather than their simple names or meanings.

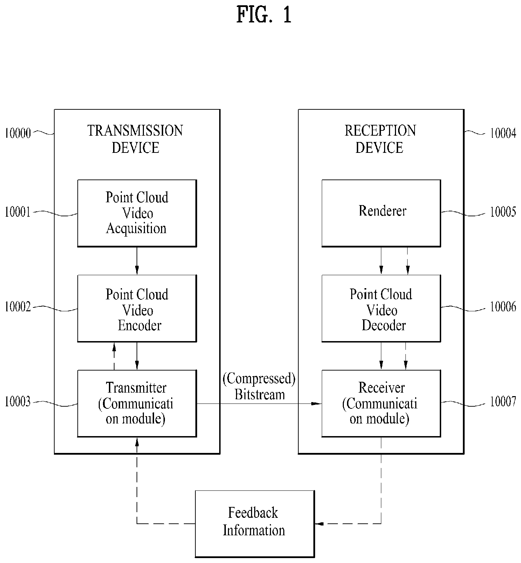

FIG. 1 shows an exemplary point cloud content providing system according to embodiments.

The point cloud content providing system illustrated in FIG. 1 may include a transmission device 10000 and a reception device 10004. The transmission device 10000 and the reception device 10004 are capable of wired or wireless communication to transmit and receive point cloud data.

The point cloud data transmission device 10000 according to the embodiments may secure and process point cloud video (or point cloud content) and transmit the same. According to embodiments, the transmission device 10000 may include a fixed station, a base transceiver system (BTS), a network, an artificial intelligence (AI) device and/or system, a robot, an AR/VR/XR device and/or server. According to embodiments, the transmission device 10000 may include a device, a robot, a vehicle, an AR/VR/XR device, a portable device, a home appliance, an Internet of Thing (IoT) device, and an AI device/server which are configured to perform communication with a base station and/or other wireless devices using a radio access technology (e.g., 5G New RAT (NR), Long Term Evolution (LTE)).

The transmission device 10000 according to the embodiments includes a point cloud video acquirer 10001, a point cloud video encoder 10002, and/or a transmitter (or communication module) 10003.

The point cloud video acquirer 10001 according to the embodiments acquires a point cloud video through a processing process such as capture, synthesis, or generation. The point cloud video is point cloud content represented by a point cloud, which is a set of points positioned in a 3D space, and may be referred to as point cloud video data. The point cloud video according to the embodiments may include one or more frames. One frame represents a still image/picture. Therefore, the point cloud video may include a point cloud image/frame/picture, and may be referred to as a point cloud image, frame, or picture.

The point cloud video encoder 10002 according to the embodiments encodes the acquired point cloud video data. The point cloud video encoder 10002 may encode the point cloud video data based on point cloud compression coding. The point cloud compression coding according to the embodiments may include geometry-based point cloud compression (G-PCC) coding and/or video-based point cloud compression (V-PCC) coding or next-generation coding. The point cloud compression coding according to the embodiments is not limited to the above-described embodiment. The point cloud video encoder 10002 may output a bitstream containing the encoded point cloud video data. The bitstream may contain not only the encoded point cloud video data, but also signaling information related to encoding of the point cloud video data.

The transmitter 10003 according to the embodiments transmits the bitstream containing the encoded point cloud video data. The bitstream according to the embodiments is encapsulated in a file or segment (for example, a streaming segment), and is transmitted over various networks such as a broadcasting network and/or a broadband network. Although not shown in the figure, the transmission device 10000 may include an encapsulator (or an encapsulation module) configured to perform an encapsulation operation. According to embodiments, the encapsulator may be included in the transmitter 10003. According to embodiments, the file or segment may be transmitted to the reception device 10004 over a network, or stored in a digital storage medium (e.g., USB, SD, CD, DVD, Blu-ray, HDD, SSD, etc.). The transmitter 10003 according to the embodiments is capable of wired/wireless communication with the reception device 10004 (or the receiver 10005) over a network of 4G, 5G, 6G, etc. In addition, the transmitter may perform a necessary data processing operation according to the network system (e.g., a 4G, 5G or 6G communication network system). The transmission device 10000 may transmit the encapsulated data in an on-demand manner.

The reception device 10004 according to the embodiments includes a receiver 10005, a point cloud video decoder 10006, and/or a renderer 10007. According to embodiments, the reception device 10004 may include a device, a robot, a vehicle, an AR/VR/XR device, a portable device, a home appliance, an Internet of Things (IoT) device, and an AI device/server which are configured to perform communication with a base station and/or other wireless devices using a radio access technology (e.g., 5G New RAT (NR), Long Term Evolution (LTE)).

The receiver 10005 according to the embodiments receives the bitstream containing the point cloud video data or the file/segment in which the bitstream is encapsulated from the network or storage medium. The receiver 10005 may perform necessary data processing according to the network system (for example, a communication network system of 4G, 5G, 6G, etc.). The receiver 10005 according to the embodiments may decapsulate the received file/segment and output a bitstream. According to embodiments, the receiver 10005 may include a decapsulator (or a decapsulation module) configured to perform a decapsulation operation. The decapsulator may be implemented as an element (or component) separate from the receiver 10005.

The point cloud video decoder 10006 decodes the bitstream containing the point cloud video data. The point cloud video decoder 10006 may decode the point cloud video data according to the method by which the point cloud video data is encoded (for example, in a reverse process of the operation of the point cloud video encoder 10002). Accordingly, the point cloud video decoder 10006 may decode the point cloud video data by performing point cloud decompression coding, which is the inverse process of the point cloud compression. The point cloud decompression coding includes G-PCC coding.

The renderer 10007 renders the decoded point cloud video data. The renderer 10007 may output point cloud content by rendering not only the point cloud video data but also audio data. According to embodiments, the renderer 10007 may include a display configured to display the point cloud content. According to embodiments, the display may be implemented as a separate device or component rather than being included in the renderer 10007.

The arrows indicated by dotted lines in the drawing represent a transmission path of feedback information acquired by the reception device 10004. The feedback information is information for reflecting interactivity with a user who consumes the point cloud content, and includes information about the user (e.g., head orientation information, viewport information, and the like). In particular, when the point cloud content is content for a service (e.g., self-driving service, etc.) that requires interaction with the user, the feedback information may be provided to the content transmitting side (e.g., the transmission device 10000) and/or the service provider. According to embodiments, the feedback information may be used in the reception device 10004 as well as the transmission device 10000, or may not be provided.

The head orientation information according to embodiments is information about the user's head position, orientation, angle, motion, and the like. The reception device 10004 according to the embodiments may calculate the viewport information based on the head orientation information. The viewport information may be information about a region of a point cloud video that the user is viewing. A viewpoint is a point through which the user is viewing the point cloud video, and may refer to a center point of the viewport region. That is, the viewport is a region centered on the viewpoint, and the size and shape of the region may be determined by a field of view (FOV). Accordingly, the reception device 10004 may extract the viewport information based on a vertical or horizontal FOV supported by the device in addition to the head orientation information. Also, the reception device 10004 performs gaze analysis or the like to check the way the user consumes a point cloud, a region that the user gazes at in the point cloud video, a gaze time, and the like. According to embodiments, the reception device 10004 may transmit feedback information including the result of the gaze analysis to the transmission device 10000. The feedback information according to the embodiments may be acquired in the rendering and/or display process. The feedback information according to the embodiments may be secured by one or more sensors included in the reception device 10004. According to embodiments, the feedback information may be secured by the renderer 10007 or a separate external element (or device, component, or the like). The dotted lines in FIG. 1 represent a process of transmitting the feedback information secured by the renderer 10007. The point cloud content providing system may process (encode/decode) point cloud data based on the feedback information. Accordingly, the point cloud video data decoder 10006 may perform a decoding operation based on the feedback information. The reception device 10004 may transmit the feedback information to the transmission device 10000. The transmission device 10000 (or the point cloud video data encoder 10002) may perform an encoding operation based on the feedback information. Accordingly, the point cloud content providing system may efficiently process necessary data (e.g., point cloud data corresponding to the user's head position) based on the feedback information rather than processing (encoding/decoding) the entire point cloud data, and provide point cloud content to the user.

According to embodiments, the transmission device 10000 may be called an encoder, a transmission device, a transmitter, or the like, and the reception device 10004 may be called a decoder, a receiving device, a receiver, or the like.

The point cloud data processed in the point cloud content providing system of FIG. 1 according to embodiments (through a series of processes of acquisition/encoding/transmission/decoding/rendering) may be referred to as point cloud content data or point cloud video data. According to embodiments, the point cloud content data may be used as a concept covering metadata or signaling information related to the point cloud data.

The elements of the point cloud content providing system illustrated in FIG. 1 may be implemented by hardware, software, a processor, and/or a combination thereof.

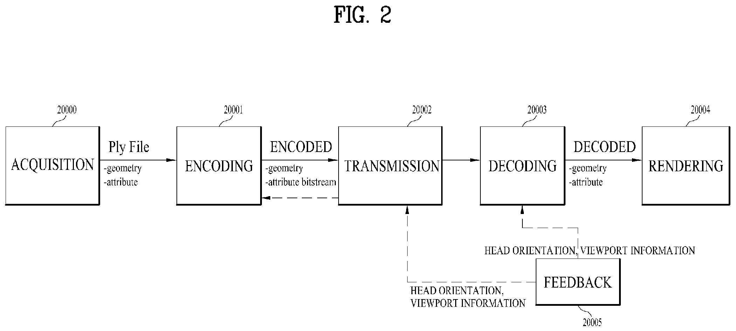

FIG. 2 is a block diagram illustrating a point cloud content providing operation according to embodiments.

The block diagram of FIG. 2 shows the operation of the point cloud content providing system described in FIG. 1. As described above, the point cloud content providing system may process point cloud data based on point cloud compression coding (e.g., G-PCC).

The point cloud content providing system according to the embodiments (for example, the point cloud transmission device 10000 or the point cloud video acquirer 10001) may acquire a point cloud video (20000). The point cloud video is represented by a point cloud belonging to a coordinate system for expressing a 3D space. The point cloud video according to the embodiments may include a Ply (Polygon File format or the Stanford Triangle format) file. When the point cloud video has one or more frames, the acquired point cloud video may include one or more Ply files. The Ply files contain point cloud data, such as point geometry and/or attributes. The geometry includes positions of points. The position of each point may be represented by parameters (for example, values of the X, Y, and Z axes) representing a three-dimensional coordinate system (e.g., a coordinate system composed of X, Y and Z axes). The attributes include attributes of points (e.g., information about texture, color (in YCbCr or RGB), reflectance r, transparency, etc. of each point). A point has one or more attributes. For example, a point may have an attribute that is a color, or two attributes that are color and reflectance. According to embodiments, the geometry may be called positions, geometry information, geometry data, or the like, and the attribute may be called attributes, attribute information, attribute data, or the like. The point cloud content providing system (for example, the point cloud transmission device 10000 or the point cloud video acquirer 10001) may secure point cloud data from information (e.g., depth information, color information, etc.) related to the acquisition process of the point cloud video.

The point cloud content providing system (for example, the transmission device 10000 or the point cloud video encoder 10002) according to the embodiments may encode the point cloud data (20001). The point cloud content providing system may encode the point cloud data based on point cloud compression coding. As described above, the point cloud data may include the geometry and attributes of a point. Accordingly, the point cloud content providing system may perform geometry encoding of encoding the geometry and output a geometry bitstream. The point cloud content providing system may perform attribute encoding of encoding attributes and output an attribute bitstream. According to embodiments, the point cloud content providing system may perform the attribute encoding based on the geometry encoding. The geometry bitstream and the attribute bitstream according to the embodiments may be multiplexed and output as one bitstream. The bitstream according to the embodiments may further contain signaling information related to the geometry encoding and attribute encoding.

The point cloud content providing system (for example, the transmission device 10000 or the transmitter 10003) according to the embodiments may transmit the encoded point cloud data (20002). As illustrated in FIG. 1, the encoded point cloud data may be represented by a geometry bitstream and an attribute bitstream. In addition, the encoded point cloud data may be transmitted in the form of a bitstream together with signaling information related to encoding of the point cloud data (for example, signaling information related to the geometry encoding and the attribute encoding). The point cloud content providing system may encapsulate a bitstream that carries the encoded point cloud data and transmit the same in the form of a file or segment.

The point cloud content providing system (for example, the reception device 10004 or the receiver 10005) according to the embodiments may receive the bitstream containing the encoded point cloud data. In addition, the point cloud content providing system (for example, the reception device 10004 or the receiver 10005) may demultiplex the bitstream.

The point cloud content providing system (e.g., the reception device 10004 or the point cloud video decoder 10005) may decode the encoded point cloud data (e.g., the geometry bitstream, the attribute bitstream) transmitted in the bitstream. The point cloud content providing system (for example, the reception device 10004 or the point cloud video decoder 10005) may decode the point cloud video data based on the signaling information related to encoding of the point cloud video data contained in the bitstream. The point cloud content providing system (for example, the reception device 10004 or the point cloud video decoder 10005) may decode the geometry bitstream to reconstruct the positions (geometry) of points. The point cloud content providing system may reconstruct the attributes of the points by decoding the attribute bitstream based on the reconstructed geometry. The point cloud content providing system (for example, the reception device 10004 or the point cloud video decoder 10005) may reconstruct the point cloud video based on the positions according to the reconstructed geometry and the decoded attributes.

The point cloud content providing system according to the embodiments (for example, the reception device 10004 or the renderer 10007) may render the decoded point cloud data (20004). The point cloud content providing system (for example, the reception device 10004 or the renderer 10007) may render the geometry and attributes decoded through the decoding process, using various rendering methods. Points in the point cloud content may be rendered to a vertex having a certain thickness, a cube having a specific minimum size centered on the corresponding vertex position, or a circle centered on the corresponding vertex position. All or part of the rendered point cloud content is provided to the user through a display (e.g., a VRjAR display, a general display, etc.).

The point cloud content providing system (for example, the reception device 10004) according to the embodiments may secure feedback information (20005). The point cloud content providing system may encode and/or decode point cloud data based on the feedback information. The feedback information and the operation of the point cloud content providing system according to the embodiments are the same as the feedback information and the operation described with reference to FIG. 1, and thus detailed description thereof is omitted.

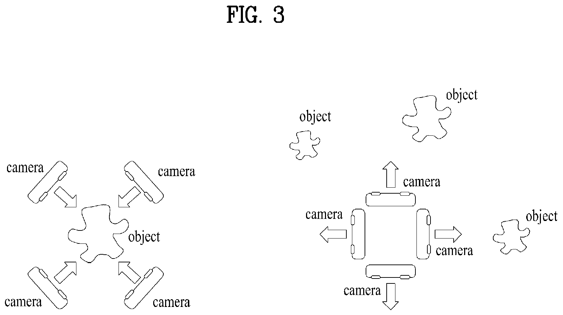

FIG. 3 illustrates an exemplary process of capturing a point cloud video according to embodiments.

FIG. 3 illustrates an exemplary point cloud video capture process of the point cloud content providing system described with reference to FIGS. 1 to 2.

Point cloud content includes a point cloud video (images and/or videos) representing an object and/or environment located in various 3D spaces (e.g., a 3D space representing a real environment, a 3D space representing a virtual environment, etc.). Accordingly, the point cloud content providing system according to the embodiments may capture a point cloud video using one or more cameras (e.g., an infrared camera capable of securing depth information, an RGB camera capable of extracting color information corresponding to the depth information, etc.), a projector (e.g., an infrared pattern projector to secure depth information), a LiDAR, or the like. The point cloud content providing system according to the embodiments may extract the shape of geometry composed of points in a 3D space from the depth information and extract the attributes of each point from the color information to secure point cloud data. An image and/or video according to the embodiments may be captured based on at least one of the inward-facing technique and the outward-facing technique.

The left part of FIG. 3 illustrates the inward-facing technique. The inward-facing technique refers to a technique of capturing images a central object with one or more cameras (or camera sensors) positioned around the central object. The inward-facing technique may be used to generate point cloud content providing a 360-degree image of a key object to the user (e.g., VRjAR content providing a 360-degree image of an object (e.g., a key object such as a character, player, object, or actor) to the user).

The right part of FIG. 3 illustrates the outward-facing technique. The outward-facing technique refers to a technique of capturing images an environment of a central object rather than the central object with one or more cameras (or camera sensors) positioned around the central object. The outward-facing technique may be used to generate point cloud content for providing a surrounding environment that appears from the user's point of view (e.g., content representing an external environment that may be provided to a user of a self-driving vehicle).

As shown in the figure, the point cloud content may be generated based on the capturing operation of one or more cameras. In this case, the coordinate system may differ among the cameras, and accordingly the point cloud content providing system may calibrate one or more cameras to set a global coordinate system before the capturing operation. In addition, the point cloud content providing system may generate point cloud content by synthesizing an arbitrary image and/or video with an image and/or video captured by the above-described capture technique. The point cloud content providing system may not perform the capturing operation described in FIG. 3 when it generates point cloud content representing a virtual space. The point cloud content providing system according to the embodiments may perform post-processing on the captured image and/or video. In other words, the point cloud content providing system may remove an unwanted area (for example, a background), recognize a space to which the captured images and/or videos are connected, and, when there is a spatial hole, perform an operation of filling the spatial hole.

The point cloud content providing system may generate one piece of point cloud content by performing coordinate transformation on points of the point cloud video secured from each camera. The point cloud content providing system may perform coordinate transformation on the points based on the coordinates of the position of each camera. Accordingly, the point cloud content providing system may generate content representing one wide range, or may generate point cloud content having a high density of points.

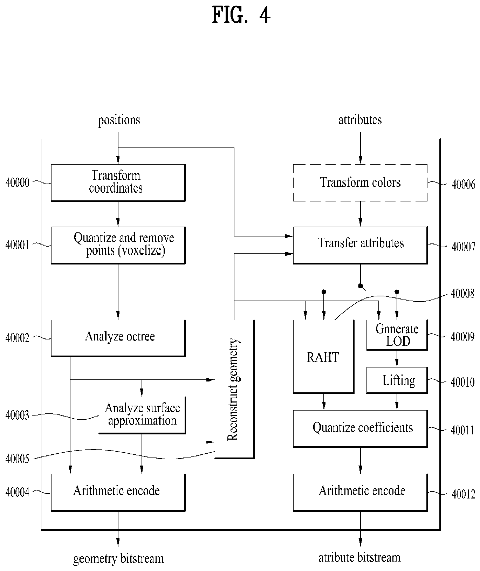

FIG. 4 illustrates an exemplary point cloud encoder according to embodiments.

FIG. 4 shows an example of the point cloud video encoder 10002 of FIG. 1. The point cloud encoder reconstructs and encodes point cloud data (e.g., positions and/or attributes of the points) to adjust the quality of the point cloud content (to, for example, lossless, lossy, or near-lossless) according to the network condition or applications. When the overall size of the point cloud content is large (e.g., point cloud content of 60 Gbps is given for 30 fps), the point cloud content providing system may fail to stream the content in real time. Accordingly, the point cloud content providing system may reconstruct the point cloud content based on the maximum target bitrate to provide the same in accordance with the network environment or the like.

As described with reference to FIGS. 1 to 2, the point cloud encoder may perform geometry encoding and attribute encoding. The geometry encoding is performed before the attribute encoding.

The point cloud encoder according to the embodiments includes a coordinate transformer (Transform coordinates) 40000, a quantizer (Quantize and remove points (voxelize)) 40001, an octree analyzer (Analyze octree) 40002, and a surface approximation analyzer (Analyze surface approximation) 40003, an arithmetic encoder (Arithmetic encode) 40004, a geometric reconstructor (Reconstruct geometry) 40005, a color transformer (Transform colors) 40006, an attribute transformer (Transform attributes) 40007, a RAHT transformer (RAHT) 40008, an LOD generator (Generate LOD) 40009, a lifting transformer (Lifting) 40010, a coefficient quantizer (Quantize coefficients) 40011, and/or an arithmetic encoder (Arithmetic encode) 40012.

The coordinate transformer 40000, the quantizer 40001, the octree analyzer 40002, the surface approximation analyzer 40003, the arithmetic encoder 40004, and the geometry reconstructor 40005 may perform geometry encoding. The geometry encoding according to the embodiments may include octree geometry coding, direct coding, trisoup geometry encoding, and entropy encoding. The direct coding and trisoup geometry encoding are applied selectively or in combination. The geometry encoding is not limited to the above-described example.

As shown in the figure, the coordinate transformer 40000 according to the embodiments receives positions and transforms the same into coordinates. For example, the positions may be transformed into position information in a three-dimensional space (for example, a three-dimensional space represented by an XYZ coordinate system). The position information in the three-dimensional space according to the embodiments may be referred to as geometry information.

The quantizer 40001 according to the embodiments quantizes the geometry. For example, the quantizer 40001 may quantize the points based on a minimum position value of all points (for example, a minimum value on each of the X, Y, and Z axes). The quantizer 40001 performs a quantization operation of multiplying the difference between the minimum position value and the position value of each point by a preset quantization scale value and then finding the nearest integer value by rounding the value obtained through the multiplication. Thus, one or more points may have the same quantized position (or position value). The quantizer 40001 according to the embodiments performs voxelization based on the quantized positions to reconstruct quantized points. As in the case of a pixel, which is the minimum unit containing 2D image/video information, points of point cloud content (or 3D point cloud video) according to the embodiments may be included in one or more voxels. The term voxel, which is a compound of volume and pixel, refers to a 3D cubic space generated when a 3D space is divided into units (unit=1.0) based on the axes representing the 3D space (e.g., X-axis, Y-axis, and Z-axis). The quantizer 40001 may match groups of points in the 3D space with voxels. According to embodiments, one voxel may include only one point. According to embodiments, one voxel may include one or more points. In order to express one voxel as one point, the position of the center of a voxel may be set based on the positions of one or more points included in the voxel. In this case, attributes of all positions included in one voxel may be combined and assigned to the voxel.

The octree analyzer 40002 according to the embodiments performs octree geometry coding (or octree coding) to present voxels in an octree structure. The octree structure represents points matched with voxels, based on the octal tree structure.

The surface approximation analyzer 40003 according to the embodiments may analyze and approximate the octree. The octree analysis and approximation according to the embodiments is a process of analyzing a region containing a plurality of points to efficiently provide octree and voxelization.

The arithmetic encoder 40004 according to the embodiments performs entropy encoding on the octree and/or the approximated octree. For example, the encoding scheme includes arithmetic encoding. As a result of the encoding, a geometry bitstream is generated.

The color transformer 40006, the attribute transformer 40007, the RAHT transformer 40008, the LOD generator 40009, the lifting transformer 40010, the coefficient quantizer 40011, and/or the arithmetic encoder 40012 perform attribute encoding. As described above, one point may have one or more attributes. The attribute encoding according to the embodiments is equally applied to the attributes that one point has. However, when an attribute (e.g., color) includes one or more elements, attribute encoding is independently applied to each element. The attribute encoding according to the embodiments includes color transform coding, attribute transform coding, region adaptive hierarchical transform (RAHT) coding, interpolation-based hierarchical nearest-neighbor prediction (prediction transform) coding, and interpolation-based hierarchical nearest-neighbor prediction with an update/lifting step (lifting transform) coding. Depending on the point cloud content, the RAHT coding, the prediction transform coding and the lifting transform coding described above may be selectively used, or a combination of one or more of the coding schemes may be used. The attribute encoding according to the embodiments is not limited to the above-described example.

The color transformer 40006 according to the embodiments performs color transform coding of transforming color values (or textures) included in the attributes. For example, the color transformer 40006 may transform the format of color information (for example, from RGB to YCbCr). The operation of the color transformer 40006 according to embodiments may be optionally applied according to the color values included in the attributes.

The geometry reconstructor 40005 according to the embodiments reconstructs (decompresses) the octree and/or the approximated octree. The geometry reconstructor 40005 reconstructs the octree/voxels based on the result of analyzing the distribution of points. The reconstructed octree/voxels may be referred to as reconstructed geometry (restored geometry).

The attribute transformer 40007 according to the embodiments performs attribute transformation to transform the attributes based on the reconstructed geometry and/or the positions on which geometry encoding is not performed. As described above, since the attributes are dependent on the geometry, the attribute transformer 40007 may transform the attributes based on the reconstructed geometry information. For example, based on the position value of a point included in a voxel, the attribute transformer 40007 may transform the attribute of the point at the position. As described above, when the position of the center of a voxel is set based on the positions of one or more points included in the voxel, the attribute transformer 40007 transforms the attributes of the one or more points. When the trisoup geometry encoding is performed, the attribute transformer 40007 may transform the attributes based on the trisoup geometry encoding.

The attribute transformer 40007 may perform the attribute transformation by calculating the average of attributes or attribute values of neighboring points (e.g., color or reflectance of each point) within a specific position/radius from the position (or position value) of the center of each voxel. The attribute transformer 40007 may apply a weight according to the distance from the center to each point in calculating the average. Accordingly, each voxel has a position and a calculated attribute (or attribute value).

The attribute transformer 40007 may search for neighboring points existing within a specific position/radius from the position of the center of each voxel based on the K-D tree or the Morton code. The K-D tree is a binary search tree and supports a data structure capable of managing points based on the positions such that nearest neighbor search (NNS) can be performed quickly. The Morton code is generated by presenting coordinates (e.g., (x, y, z)) representing 3D positions of all points as bit values and mixing the bits. For example, when the coordinates representing the position of a point are (5, 9, 1), the bit values for the coordinates are (0101, 1001, 0001). Mixing the bit values according to the bit index in order of z, y, and x yields 010001000111. This value is expressed as a decimal number of 1095. That is, the Morton code value of the point having coordinates (5, 9, 1) is 1095. The attribute transformer 40007 may order the points based on the Morton code values and perform NNS through a depth-first traversal process. After the attribute transformation operation, the K-D tree or the Morton code is used when the NNS is needed in another transformation process for attribute coding.

As shown in the figure, the transformed attributes are input to the RAHT transformer 40008 and/or the LOD generator 40009.

The RAHT transformer 40008 according to the embodiments performs RAHT coding for predicting attribute information based on the reconstructed geometry information. For example, the RAHT transformer 40008 may predict attribute information of a node at a higher level in the octree based on the attribute information associated with a node at a lower level in the octree.

The LOD generator 40009 according to the embodiments generates a level of detail (LOD) to perform prediction transform coding. The LOD according to the embodiments is a degree of detail of point cloud content. As the LOD value decrease, it indicates that the detail of the point cloud content is degraded. As the LOD value increases, it indicates that the detail of the point cloud content is enhanced. Points may be classified by the LOD.

The lifting transformer 40010 according to the embodiments performs lifting transform coding of transforming the attributes a point cloud based on weights. As described above, lifting transform coding may be optionally applied.

The coefficient quantizer 40011 according to the embodiments quantizes the attribute-coded attributes based on coefficients.

The arithmetic encoder 40012 according to the embodiments encodes the quantized attributes based on arithmetic coding.

Although not shown in the figure, the elements of the point cloud encoder of FIG. 4 may be implemented by hardware including one or more processors or integrated circuits configured to communicate with one or more memories included in the point cloud providing apparatus, software, firmware, or a combination thereof. The one or more processors may perform at least one of the operations and/or functions of the elements of the point cloud encoder of FIG. 4 described above. Additionally, the one or more processors may operate or execute a set of software programs and/or instructions for performing the operations and/or functions of the elements of the point cloud encoder of FIG. 4. The one or more memories according to the embodiments may include a high speed random access memory, or include a non-volatile memory (e.g., one or more magnetic disk storage devices, flash memory devices, or other non-volatile solid-state memory devices).

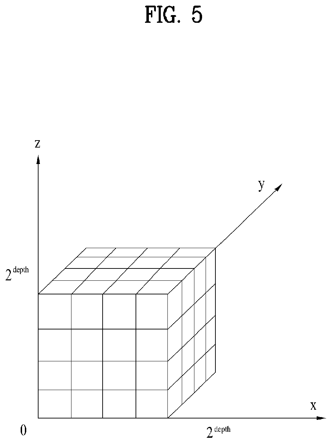

FIG. 5 shows an example of voxels according to embodiments.

FIG. 5 shows voxels positioned in a 3D space represented by a coordinate system composed of three axes, which are the X-axis, the Y-axis, and the Z-axis. As described with reference to FIG. 4, the point cloud encoder (e.g., the quantizer 40001) may perform voxelization. Voxel refers to a 3D cubic space generated when a 3D space is divided into units (unit=1.0) based on the axes representing the 3D space (e.g., X-axis, Y-axis, and Z-axis). FIG. 5 shows an example of voxels generated through an octree structure in which a cubical axis-aligned bounding box defined by two poles (0, 0, 0) and (2d, 2d, 2d) is recursively subdivided. One voxel includes at least one point. The spatial coordinates of a voxel may be estimated from the positional relationship with a voxel group. As described above, a voxel has an attribute (such as color or reflectance) like pixels of a 2D image/video. The details of the voxel are the same as those described with reference to FIG. 4, and therefore a description thereof is omitted.

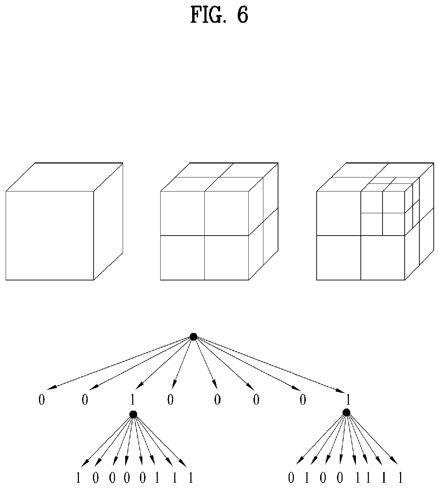

FIG. 6 shows an example of an octree and occupancy code according to embodiments.

As described with reference to FIGS. 1 to 4, the point cloud content providing system (point cloud video encoder 10002) or the point cloud encoder (for example, the octree analyzer 40002) performs octree geometry coding (or octree coding) based on an octree structure to efficiently manage the region and/or position of the voxel.

The upper part of FIG. 6 shows an octree structure. The 3D space of the point cloud content according to the embodiments is represented by axes (e.g., X-axis, Y-axis, and Z-axis) of the coordinate system. The octree structure is created by recursive subdividing of a cubical axis-aligned bounding box defined by two poles (0, 0, 0) and (2d, 2d, 2d). Here, 2d may be set to a value constituting the smallest bounding box surrounding all points of the point cloud content (or point cloud video). Here, d denotes the depth of the octree. The value of d is determined in the following equation. In the following equation, (xintn, yintn, zintn) denotes the positions (or position values) of quantized points.

$$\mathrm{d} = Ceil\left(Log2\big(Max\big(x_n^{int}, y_n^{int}, z_n^{int}, n = 1, \ldots, N\big) + 1\big)\right)$$

As shown in the middle of the upper part of FIG. 6, the entire 3D space may be divided into eight spaces according to partition. Each divided space is represented by a cube with six faces. As shown in the upper right of FIG. 6, each of the eight spaces is divided again based on the axes of the coordinate system (e.g., X-axis, Y-axis, and Z-axis). Accordingly, each space is divided into eight smaller spaces. The divided smaller space is also represented by a cube with six faces. This partitioning scheme is applied until the leaf node of the octree becomes a voxel.

The lower part of FIG. 6 shows an octree occupancy code. The occupancy code of the octree is generated to indicate whether each of the eight divided spaces generated by dividing one space contains at least one point. Accordingly, a single occupancy code is represented by eight child nodes. Each child node represents the occupancy of a divided space, and the child node has a value in 1 bit. Accordingly, the occupancy code is represented as an 8-bit code. That is, when at least one point is contained in the space corresponding to a child node, the node is assigned a value of 1. When no point is contained in the space corresponding to the child node (the space is empty), the node is assigned a value of 0. Since the occupancy code shown in FIG. 6 is 00100001, it indicates that the spaces corresponding to the third child node and the eighth child node among the eight child nodes each contain at least one point. As shown in the figure, each of the third child node and the eighth child node has eight child nodes, and the child nodes are represented by an 8-bit occupancy code. The figure shows that the occupancy code of the third child node is 10000111, and the occupancy code of the eighth child node is 01001111. The point cloud encoder (for example, the arithmetic encoder 40004) according to the embodiments may perform entropy encoding on the occupancy codes. In order to increase the compression efficiency, the point cloud encoder may perform intra/inter-coding on the occupancy codes. The reception device (for example, the reception device 10004 or the point cloud video decoder 10006) according to the embodiments reconstructs the octree based on the occupancy codes.

The point cloud encoder (for example, the point cloud encoder of FIG. 4 or the octree analyzer 40002) according to the embodiments may perform voxelization and octree coding to store the positions of points. However, points are not always evenly distributed in the 3D space, and accordingly there may be a specific region in which fewer points are present. Accordingly, it is inefficient to perform voxelization for the entire 3D space. For example, when a specific region contains few points, voxelization does not need to be performed in the specific region.

Accordingly, for the above-described specific region (or a node other than the leaf node of the octree), the point cloud encoder according to the embodiments may skip voxelization and perform direct coding to directly code the positions of points included in the specific region. The coordinates of a direct coding point according to the embodiments are referred to as direct coding mode (DCM). The point cloud encoder according to the embodiments may also perform trisoup geometry encoding, which is to reconstruct the positions of the points in the specific region (or node) based on voxels, based on a surface model. The trisoup geometry encoding is geometry encoding that represents an object as a series of triangular meshes. Accordingly, the point cloud decoder may generate a point cloud from the mesh surface. The direct coding and trisoup geometry encoding according to the embodiments may be selectively performed. In addition, the direct coding and trisoup geometry encoding according to the embodiments may be performed in combination with octree geometry coding (or octree coding).

To perform direct coding, the option to use the direct mode for applying direct coding should be activated. A node to which direct coding is to be applied is not a leaf node, and points less than a threshold should be present within a specific node. In addition, the total number of points to which direct coding is to be applied should not exceed a preset threshold. When the conditions above are satisfied, the point cloud encoder (or the arithmetic encoder 40004) according to the embodiments may perform entropy coding on the positions (or position values) of the points.

The point cloud encoder (for example, the surface approximation analyzer 40003) according to the embodiments may determine a specific level of the octree (a level less than the depth d of the octree), and the surface model may be used staring with that level to perform trisoup geometry encoding to reconstruct the positions of points in the region of the node based on voxels (Trisoup mode). The point cloud encoder according to the embodiments may specify a level at which trisoup geometry encoding is to be applied. For example, when the specific level is equal to the depth of the octree, the point cloud encoder does not operate in the trisoup mode. In other words, the point cloud encoder according to the embodiments may operate in the trisoup mode only when the specified level is less than the value of depth of the octree. The 3D cube region of the nodes at the specified level according to the embodiments is called a block. One block may include one or more voxels. The block or voxel may correspond to a brick. Geometry is represented as a surface within each block. The surface according to embodiments may intersect with each edge of a block at most once.

One block has 12 edges, and accordingly there are at least 12 intersections in one block. Each intersection is called a vertex (or apex). A vertex present along an edge is detected when there is at least one occupied voxel adjacent to the edge among all blocks sharing the edge. The occupied voxel according to the embodiments refers to a voxel containing a point. The position of the vertex detected along the edge is the average position along the edge of all voxels adjacent to the edge among all blocks sharing the edge.

Once the vertex is detected, the point cloud encoder according to the embodiments may perform entropy encoding on the starting point (x, y, z) of the edge, the direction vector ($\Delta$x, $\Delta$y, $\Delta$z) of the edge, and the vertex position value (relative position value within the edge). When the trisoup geometry encoding is applied, the point cloud encoder according to the embodiments (for example, the geometry reconstructor 40005) may generate restored geometry (reconstructed geometry) by performing the triangle reconstruction, up-sampling, and voxelization processes.

The vertices positioned at the edge of the block determine a surface that passes through the block. The surface according to the embodiments is a non-planar polygon. In the triangle reconstruction process, a surface represented by a triangle is reconstructed based on the starting point of the edge, the direction vector of the edge, and the position values of the vertices. The triangle reconstruction process is performed by: i) calculating the centroid value of each vertex, ii) subtracting the center value from each vertex value, and iii) estimating the sum of the squares of the values obtained by the subtraction.

$$\text{i) } \begin{bmatrix} \mu_x \\ \mu_y \\ \mu_z \end{bmatrix} = \frac{1}{n}\sum_{i=1}^{n}\begin{bmatrix} x_i \\ y_i \\ z_i \end{bmatrix}; \text{ ii) } \begin{bmatrix} \bar{x}_i \\ \bar{y}_i \\ \bar{z}_i \end{bmatrix} = \begin{bmatrix} x_i \\ y_i \\ z_i \end{bmatrix} - \begin{bmatrix} \mu_x \\ \mu_y \\ \mu_z \end{bmatrix}; \text{ iii) } \begin{bmatrix} \sigma_x^2 \\ \sigma_y^2 \\ \sigma_z^2 \end{bmatrix} = \sum_{i=1}^{n}\begin{bmatrix} \bar{x}_i^2 \\ \bar{y}_i^2 \\ \bar{z}_i^2 \end{bmatrix}$$

The minimum value of the sum is estimated, and the projection process is performed according to the axis with the minimum value. For example, when the element x is the minimum, each vertex is projected on the x-axis with respect to the center of the block, and projected on the (y, z) plane. When the values obtained through projection on the (y, z) plane are (ai, bi), the value of $\theta$ is estimated through atan2(bi, ai), and the vertices are ordered based on the value of $\theta$. The table below shows a combination of vertices for creating a triangle according to the number of the vertices. The vertices are ordered from 1 to n. The table below shows that for four vertices, two triangles may be constructed according to combinations of vertices. The first triangle may consist of vertices 1, 2, and 3 among the ordered vertices, and the second triangle may consist of vertices 3, 4, and 1 among the ordered vertices.

Triangles formed from vertices ordered 1,...,n

```
n triangles
3 (1,2,3)
4 (1,2,3), (3,4,1)
5 (1,2,3), (3,4,5), (5,1,3)
6 (1,2,3), (3,4,5), (5,6,1), (1,3,5)
7 (1,2,3), (3,4,5), (5,6,7), (7,1,3), (3,5,7)
8 (1,2,3), (3,4,5), (5,6,7), (7,8,1), (1,3,5), (5,7,1)
9 (1,2,3), (3,4,5), (5,6,7), (7,8,9), (9,1,3), (3,5,7), (7,9,3)
```

10 (1,2,3), (3,4,5), (5,6,7), (7,8,9), (9,10,1), (1,3,5), (5,7,9), (9,1,5)
11 (1,2,3), (3,4,5), (5,6,7), (7,8,9), (9,10,11), (11,1,3), (3,5,7), (7,9,11), (11,3,7)
12 (1,2,3), (3,4,5), (5,6,7), (7,8,9), (9,10,11), (11,12,1), (1,3,5), (5,7,9), (9,11,1), (1,5,9)

The upsampling process is performed to add points in the middle along the edge of the triangle and perform voxelization. The added points are generated based on the upsampling factor and the width of the block. The added points are called refined vertices. The point cloud encoder according to the embodiments may voxelize the refined vertices. In addition, the point cloud encoder may perform attribute encoding based on the voxelized positions (or position values).

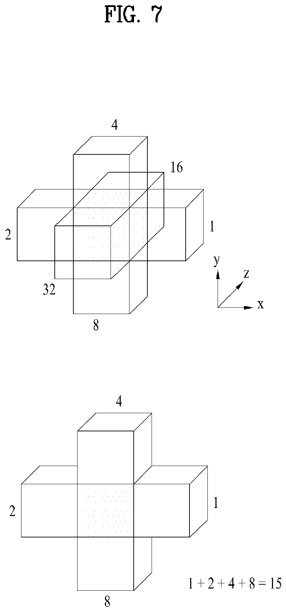

FIG. 7 shows an example of a neighbor node pattern according to embodiments.

In order to increase the compression efficiency of the point cloud video, the point cloud encoder according to the embodiments may perform entropy coding based on context adaptive arithmetic coding.

As described with reference to FIGS. 1 to 6, the point cloud content providing system or the point cloud encoder (for example, the point cloud video encoder 10002, the point cloud encoder or arithmetic encoder 40004 of FIG. 4) may perform entropy coding on the occupancy code immediately. In addition, the point cloud content providing system or the point cloud encoder may perform entropy encoding (intra encoding) based on the occupancy code of the current node and the occupancy of neighboring nodes, or perform entropy encoding (inter encoding) based on the occupancy code of the previous frame. A frame according to embodiments represents a set of point cloud videos generated at the same time. The compression efficiency of intra encoding/inter encoding according to the embodiments may depend on the number of neighboring nodes that are referenced. When the bits increase, the operation becomes complicated, but the encoding may be biased to one side, which may increase the compression efficiency. For example, when a 3-bit context is given, coding needs to be performed using $2^3 = 8$ methods. The part divided for coding affects the complexity of implementation. Accordingly, it is necessary to meet an appropriate level of compression efficiency and complexity.

FIG. 7 illustrates a process of obtaining an occupancy pattern based on the occupancy of neighbor nodes. The point cloud encoder according to the embodiments determines occupancy of neighbor nodes of each node of the octree and obtains a value of a neighbor pattern. The neighbor node pattern is used to infer the occupancy pattern of the node. The upper part of FIG. 7 shows a cube corresponding to a node (a cube positioned in the middle) and six cubes (neighbor nodes) sharing at least one face with the cube. The nodes shown in the figure are nodes of the same depth. The numbers shown in the figure represent weights (1, 2, 4, 8, 16, and 32) associated with the six nodes, respectively. The weights are assigned sequentially according to the positions of neighboring nodes.

The lower part of FIG. 7 shows neighbor node pattern values. A neighbor node pattern value is the sum of values multiplied by the weight of an occupied neighbor node (a neighbor node having a point). Accordingly, the neighbor node pattern values are 0 to 63. When the neighbor node pattern value is 0, it indicates that there is no node having a point (no occupied node) among the neighbor nodes of the node. When the neighbor node pattern value is 63, it indicates that all neighbor nodes are occupied nodes. As shown in the figure, since neighbor nodes to which weights 1, 2, 4, and 8 are assigned are occupied nodes, the neighbor node pattern value is 15, the sum of 1, 2, 4, and 8. The point cloud encoder may perform coding according to the neighbor node pattern value (for example, when the neighbor node pattern value is 63, 64 kinds of coding may be performed). According to embodiments, the point cloud encoder may reduce coding complexity by changing a neighbor node pattern value (for example, based on a table by which 64 is changed to 10 or 6).

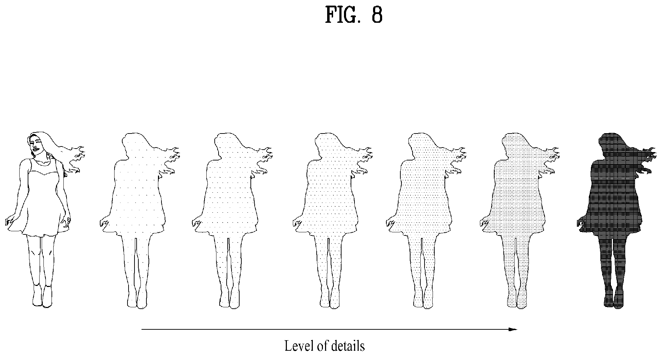

FIG. 8 illustrates an example of point configuration in each LOD according to embodiments.

As described with reference to FIGS. 1 to 7, encoded geometry is reconstructed (decompressed) before attribute encoding is performed. When direct coding is applied, the geometry reconstruction operation may include changing the placement of direct coded points (e.g., placing the direct coded points in front of the point cloud data). When trisoup geometry encoding is applied, the geometry reconstruction process is performed through triangle reconstruction, up-sampling, and voxelization. Since the attribute depends on the geometry, attribute encoding is performed based on the reconstructed geometry.

The point cloud encoder (for example, the LOD generator 40009) may classify (reorganize) points by LOD. The figure shows the point cloud content corresponding to LODs. The leftmost picture in the figure represents original point cloud content. The second picture from the left of the figure represents distribution of the points in the lowest LOD, and the rightmost picture in the figure represents distribution of the points in the highest LOD. That is, the points in the lowest LOD are sparsely distributed, and the points in the highest LOD are densely distributed. That is, as the LOD rises in the direction pointed by the arrow indicated at the bottom of the figure, the space (or distance) between points is narrowed.

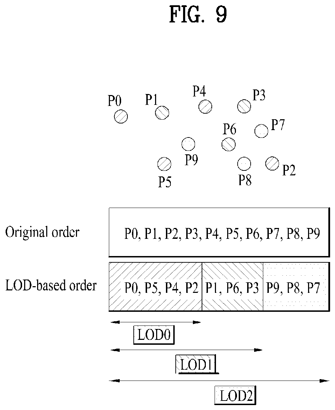

FIG. 9 illustrates an example of point configuration for each LOD according to embodiments.

As described with reference to FIGS. 1 to 8, the point cloud content providing system, or the point cloud encoder (for example, the point cloud video encoder 10002, the point cloud encoder of FIG. 4, or the LOD generator 40009) may generates an LOD. The LOD is generated by reorganizing the points into a set of refinement levels according to a set LOD distance value (or a set of Euclidean distances). The LOD generation process is performed not only by the point cloud encoder, but also by the point cloud decoder.

The upper part of FIG. 9 shows examples (P0 to P9) of points of the point cloud content distributed in a 3D space. In FIG. 9, the original order represents the order of points P0 to P9 before LOD generation. In FIG. 9, the LOD based order represents the order of points according to the LOD generation. Points are reorganized by LOD. Also, a high LOD contains the points belonging to lower LODs. As shown in FIG. 9, LOD0 contains P0, P5, P4 and P2. LOD1 contains the points of LOD0, P1, P6 and P3. LOD2 contains the points of LOD0, the points of LOD1, P9, P8 and P7.

As described with reference to FIG. 4, the point cloud encoder according to the embodiments may perform prediction transform coding, lifting transform coding, and RAHT transform coding selectively or in combination.

The point cloud encoder according to the embodiments may generate a predictor for points to perform prediction transform coding for setting a predicted attribute (or predicted attribute value) of each point. That is, N predictors may be generated for N points. The predictor according to the embodiments may calculate a weight (=1/distance) based on the LOD value of each point, indexing information about neighboring points present within a set distance for each LOD, and a distance to the neighboring points.

The predicted attribute (or attribute value) according to the embodiments is set to the average of values obtained by multiplying the attributes (or attribute values) (e.g., color, reflectance, etc.) of neighbor points set in the predictor of each point by a weight (or weight value) calculated based on the distance to each neighbor point. The point cloud encoder according to the embodiments (for example, the coefficient quantizer 40011) may quantize and inversely quantize the residuals (which may be called residual attributes, residual attribute values, or attribute prediction residuals) obtained by subtracting a predicted attribute (attribute value) from the attribute (attribute value) of each point. The quantization process is configured as shown in the following table.

[Table 1]

| Attribute prediction residuals quantization pseudo code |
| --- |
| int PCCQuantization(int value, int quantStep) { |
| if( value >=0) { |
| return floor(value / quantStep + 1.0 / 3.0); |
| } else { |
| return -floor(-value / quantStep + 1.0 / 3.0); |
| } |
| } |

[Table 2]

| Attribute prediction residuals inverse quantization pseudo code |
| --- |
| int PCCInverseQuantization(int value, int quantStep) { |
| if( quantStep ==0) { |
| return value; |
| } else { |
| return value * quantStep; |
| } |
| } |

When the predictor of each point has neighbor points, the point cloud encoder (e.g., the arithmetic encoder 40012) according to the embodiments may perform entropy coding on the quantized and inversely quantized residual values as described above. When the predictor of each point has no neighbor point, the point cloud encoder according to the embodiments (for example, the arithmetic encoder 40012) may perform entropy coding on the attributes of the corresponding point without performing the above-described operation.

The point cloud encoder according to the embodiments (for example, the lifting transformer 40010) may generate a predictor of each point, set the calculated LOD and register neighbor points in the predictor, and set weights according to the distances to neighbor points to perform lifting transform coding. The lifting transform coding according to the embodiments is similar to the above-described prediction transform coding, but differs therefrom in that weights are cumulatively applied to attribute values. The process of cumulatively applying weights to the attribute values according to embodiments is configured as follows.

1) Create an array Quantization Weight (QW) for storing the weight value of each point. The initial value of all elements of QW is 1.0. Multiply the QW values of the predictor indexes of the neighbor nodes registered in the predictor by the weight of the predictor of the current point, and add the values obtained by the multiplication.

2) Lift prediction process: Subtract the value obtained by multiplying the attribute value of the point by the weight from the existing attribute value to calculate a predicted attribute value.

3) Create temporary arrays called updateweight and update and initialize the temporary arrays to zero.

4) Cumulatively add the weights calculated by multiplying the weights calculated for all predictors by a weight stored in the QW corresponding to a predictor index to the updateweight array as indexes of neighbor nodes. Cumulatively add, to the update array, a value obtained by multiplying the attribute value of the index of a neighbor node by the calculated weight.

5) Lift update process: Divide the attribute values of the update array for all predictors by the weight value of the updateweight array of the predictor index, and add the existing attribute value to the values obtained by the division.

6) Calculate predicted attributes by multiplying the attribute values updated through the lift update process by the weight updated through the lift prediction process (stored in the QW) for all predictors. The point cloud encoder (e.g., coefficient quantizer 40011) according to the embodiments quantizes the predicted attribute values. In addition, the point cloud encoder (e.g., the arithmetic encoder 40012) performs entropy coding on the quantized attribute values.

The point cloud encoder (for example, the RAHT transformer 40008) according to the embodiments may perform RAHT transform coding in which attributes of nodes of a higher level are predicted using the attributes associated with nodes of a lower level in the octree. RAHT transform coding is an example of attribute intra coding through an octree backward scan. The point cloud encoder according to the embodiments scans the entire region from the voxel and repeats the merging process of merging the voxels into a larger block at each step until the root node is reached. The merging process according to the embodiments is performed only on the occupied nodes. The merging process is not performed on the empty node. The merging process is performed on an upper node immediately above the empty node.

The equation below represents a RAHT transformation matrix. In the equation, $g_{l\,x,y,z}$ denotes the average attribute value of voxels at level $l$. $g_{l\,x,y,z}$ may be calculated based on $g_{l+1\,2x,y,z}$ and $g_{l+1\,2x+1,y,z}$. The weights for $g_{l\,2x,y,z}$ and $g_{l\,2x+1,y,z}$ are w1 = $w_{l\,2x,y,z}$ and w2 = $w_{l\,2x+1,y,z}$.

$$\begin{bmatrix} g_{l-1\,x,y,z} \\ h_{l-1\,x,y,z} \end{bmatrix} = T_{w1\,w2} \begin{bmatrix} g_{l\,2x,y,z} \\ g_{l\,2x+1,y,z} \end{bmatrix}, \quad T_{w1\,w2} = \frac{1}{\sqrt{w1+w2}} \begin{bmatrix} \sqrt{w1} & \sqrt{w2} \\ -\sqrt{w2} & \sqrt{w1} \end{bmatrix}$$

Here, $g_{l-1\,x,y,z}$ is a low-pass value and is used in the merging process at the next higher level. $h_{l-1\,x,y,z}$ denotes high-pass coefficients. The high-pass coefficients at each step are quantized and subjected to entropy coding (for example, encoding by the arithmetic encoder 400012). The weights are calculated as $w_{l-1\,x',y',z} = w_{l\,2x,y,z} + w_{l\,2x+1,y,z}$. The

$$\begin{bmatrix} gDC \\ h_{0\,0,0,0} \end{bmatrix} = T_{w1000\,w1001} \begin{bmatrix} g_{1\,0,0,0z} \\ g_{1\,0,0,1} \end{bmatrix}$$

root node is created through the $g_{1\,0,0,0}$ and $g_{1\,0,0,1}$ as follows.

The value of gDC is also quantized and subjected to entropy coding in the same manner of the high-pass coefficients.

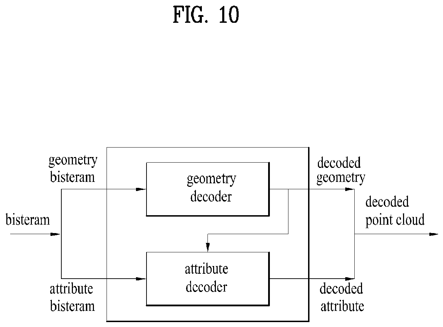

FIG. 10 illustrates a point cloud decoder according to embodiments.

The point cloud decoder illustrated in FIG. 10 is an example of the point cloud video decoder 10006 described in FIG. 1, and may perform the same or similar operations as the operations of the point cloud video decoder 10006 illustrated in FIG. 1. As shown in the figure, the point cloud decoder may receive a geometry bitstream and an attribute bitstream contained in one or more bitstreams. The point cloud decoder includes a geometry decoder and an attribute decoder. The geometry decoder performs geometry decoding on the geometry bitstream and outputs decoded geometry. The attribute decoder performs attribute decoding based on the decoded geometry and the attribute bitstream, and outputs decoded attributes. The decoded geometry and decoded attributes are used to reconstruct point cloud content (a decoded point cloud).

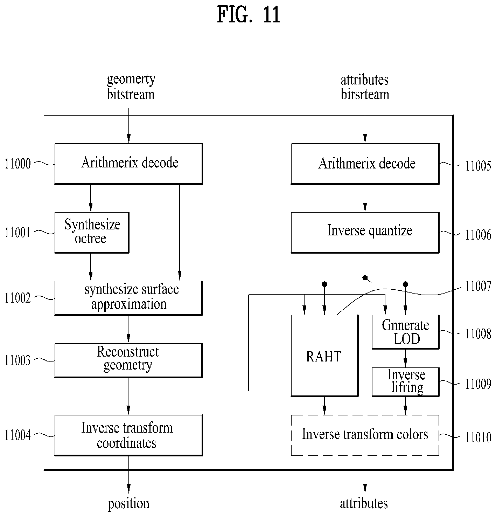

FIG. 11 illustrates a point cloud decoder according to embodiments.

The point cloud decoder illustrated in FIG. 11 is an example of the point cloud decoder illustrated in FIG. 10, and may perform a decoding operation, which is a reverse process of the encoding operation of the point cloud encoder illustrated in FIGS. 1 to 9.

As described with reference to FIGS. 1 and 10, the point cloud decoder may perform geometry decoding and attribute decoding. The geometry decoding is performed before the attribute decoding.

The point cloud decoder according to the embodiments includes an arithmetic decoder (Arithmetic decode) 11000, an octree synthesizer (Synthesize octree) 11001, a surface approximation synthesizer (Synthesize surface approximation) 11002, and a geometry reconstructor (Reconstruct geometry) 11003, a coordinate inverse transformer (Inverse transform coordinates) 11004, an arithmetic decoder (Arithmetic decode) 11005, an inverse quantizer (Inverse quantize) 11006, a RAHT transformer 11007, an LOD generator (Generate LOD) 11008, an inverse lifter (inverse lifting) 11009, and/or a color inverse transformer (Inverse transform colors) 11010.

The arithmetic decoder 11000, the octree synthesizer 11001, the surface approximation synthesizer 11002, and the geometry reconstructor 11003, and the coordinate inverse transformer 11004 may perform geometry decoding. The geometry decoding according to the embodiments may include direct coding and trisoup geometry decoding. The direct coding and trisoup geometry decoding are selectively applied. The geometry decoding is not limited to the above-described example, and is performed as a reverse process of the geometry encoding described with reference to FIGS. 1 to 9.

The arithmetic decoder 11000 according to the embodiments decodes the received geometry bitstream based on the arithmetic coding. The operation of the arithmetic decoder 11000 corresponds to the inverse process of the arithmetic encoder 40004.

The octree synthesizer 11001 according to the embodiments may generate an octree by acquiring an occupancy code from the decoded geometry bitstream (or information on the geometry secured as a result of decoding). The occupancy code is configured as described in detail with reference to FIGS. 1 to 9.

When the trisoup geometry encoding is applied, the surface approximation synthesizer 11002 according to the embodiments may synthesize a surface based on the decoded geometry and/or the generated octree.

The geometry reconstructor 11003 according to the embodiments may regenerate geometry based on the surface and/or the decoded geometry. As described with reference to FIGS. 1 to 9, direct coding and trisoup geometry encoding are selectively applied. Accordingly, the geometry reconstructor 11003 directly imports and adds position information about the points to which direct coding is applied. When the trisoup geometry encoding is applied, the geometry reconstructor 11003 may reconstruct the geometry by performing the reconstruction operations of the geometry reconstructor 40005, for example, triangle reconstruction, up-sampling, and voxelization. Details are the same as those described with reference to FIG. 6, and thus description thereof is omitted. The reconstructed geometry may include a point cloud picture or frame that does not contain attributes.

The coordinate inverse transformer 11004 according to the embodiments may acquire positions of the points by transforming the coordinates based on the reconstructed geometry.

The arithmetic decoder 11005, the inverse quantizer 11006, the RAHT transformer 11007, the LOD generator 11008, the inverse lifter 11009, and/or the color inverse transformer 11010 may perform the attribute decoding described with reference to FIG. 10. The attribute decoding according to the embodiments includes region adaptive hierarchical transform (RAHT) decoding, interpolation-based hierarchical nearest-neighbor prediction (prediction transform) decoding, and interpolation-based hierarchical nearest-neighbor prediction with an update/lifting step (lifting transform) decoding. The three decoding schemes described above may be used selectively, or a combination of one or more decoding schemes may be used. The attribute decoding according to the embodiments is not limited to the above-described example.

The arithmetic decoder 11005 according to the embodiments decodes the attribute bitstream by arithmetic coding.

The inverse quantizer 11006 according to the embodiments inversely quantizes the information about the decoded attribute bitstream or attributes secured as a result of the decoding, and outputs the inversely quantized attributes (or attribute values). The inverse quantization may be selectively applied based on the attribute encoding of the point cloud encoder.

According to embodiments, the RAHT transformer 11007, the LOD generator 11008, and/or the inverse lifter 11009 may process the reconstructed geometry and the inversely quantized attributes. As described above, the RAHT transformer 11007, the LOD generator 11008, and/or the inverse lifter 11009 may selectively perform a decoding operation corresponding to the encoding of the point cloud encoder.

The color inverse transformer 11010 according to the embodiments performs inverse transform coding to inversely transform a color value (or texture) included in the decoded attributes. The operation of the color inverse transformer 11010 may be selectively performed based on the operation of the color transformer 40006 of the point cloud encoder.

Although not shown in the figure, the elements of the point cloud decoder of FIG. 11 may be implemented by hardware including one or more processors or integrated circuits configured to communicate with one or more memories included in the point cloud providing device, software, firmware, or a combination thereof. The one or more processors may perform at least one or more of the operations and/or functions of the elements of the point cloud decoder of FIG. 11 described above. Additionally, the one or more processors may operate or execute a set of software programs and/or instructions for performing the operations and/or functions of the elements of the point cloud decoder of FIG. 11.

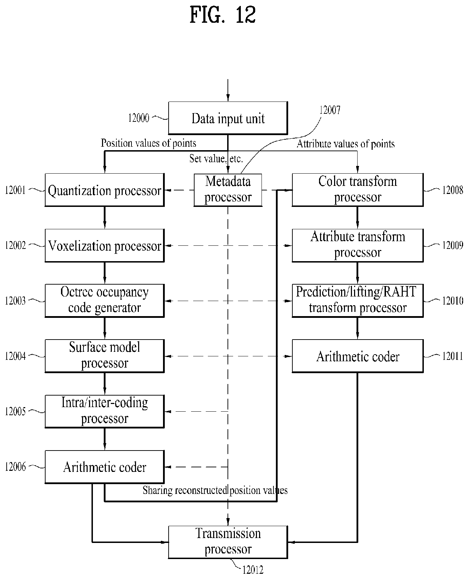

FIG. 12 illustrates a transmission device according to embodiments.

The transmission device shown in FIG. 12 is an example of the transmission device 10000 of FIG. 1 (or the point cloud encoder of FIG. 4). The transmission device illustrated in FIG. 12 may perform one or more of the operations and methods the same as or similar to those of the point cloud encoder described with reference to FIGS. 1 to 9. The transmission device according to the embodiments may include a data input unit 12000, a quantization processor 12001, a voxelization processor 12002, an octree occupancy code generator 12003, a surface model processor 12004, an intra/inter-coding processor 12005, an arithmetic coder 12006, a metadata processor 12007, a color transform processor 12008, an attribute transform processor 12009, a prediction/lifting/RAHT transform processor 12010, an arithmetic coder 12011 and/or a transmission processor 12012.

The data input unit 12000 according to the embodiments receives or acquires point cloud data. The data input unit 12000 may perform an operation and/or acquisition method the same as or similar to the operation and/or acquisition method of the point cloud video acquirer 10001 (or the acquisition process 20000 described with reference to FIG. 2).

The data input unit 12000, the quantization processor 12001, the voxelization processor 12002, the octree occupancy code generator 12003, the surface model processor 12004, the intra/inter-coding processor 12005, and the arithmetic coder 12006 perform geometry encoding. The geometry encoding according to the embodiments is the same as or similar to the geometry encoding described with reference to FIGS. 1 to 9, and thus a detailed description thereof is omitted.

The quantization processor 12001 according to the embodiments quantizes geometry (e.g., position values of points). The operation and/or quantization of the quantization processor 12001 is the same as or similar to the operation and/or quantization of the quantizer 40001 described with reference to FIG. 4. Details are the same as those described with reference to FIGS. 1 to 9.

The voxelization processor 12002 according to the embodiments voxelizes the quantized position values of the points. The voxelization processor 120002 may perform an operation and/or process the same or similar to the operation and/or the voxelization process of the quantizer 40001 described with reference to FIG. 4. Details are the same as those described with reference to FIGS. 1 to 9.

The octree occupancy code generator 12003 according to the embodiments performs octree coding on the voxelized positions of the points based on an octree structure. The octree occupancy code generator 12003 may generate an occupancy code. The octree occupancy code generator 12003 may perform an operation and/or method the same as or similar to the operation and/or method of the point cloud encoder (or the octree analyzer 40002) described with reference to FIGS. 4 and 6. Details are the same as those described with reference to FIGS. 1 to 9.

The surface model processor 12004 according to the embodiments may perform trisoup geometry encoding based on a surface model to reconstruct the positions of points in a specific region (or node) on a voxel basis. The surface model processor 12004 may perform an operation and/or method the same as or similar to the operation and/or method of the point cloud encoder (for example, the surface approximation analyzer 40003) described with reference to FIG. 4. Details are the same as those described with reference to FIGS. 1 to 9.

The intra/inter-coding processor 12005 according to the embodiments may perform intra/inter-coding on point cloud data. The intra/inter-coding processor 12005 may perform coding the same as or similar to the intra/inter-coding described with reference to FIG. 7. Details are the same as those described with reference to FIG. 7. According to embodiments, the intra/inter-coding processor 12005 may be included in the arithmetic coder 12006.

The arithmetic coder 12006 according to the embodiments performs entropy encoding on an octree of the point cloud data and/or an approximated octree. For example, the encoding scheme includes arithmetic encoding. The arithmetic coder 12006 performs an operation and/or method the same as or similar to the operation and/or method of the arithmetic encoder 40004.

The metadata processor 12007 according to the embodiments processes metadata about the point cloud data, for example, a set value, and provides the same to a necessary processing process such as geometry encoding and/or attribute encoding. Also, the metadata processor 12007 according to the embodiments may generate and/or process signaling information related to the geometry encoding and/or the attribute encoding. The signaling information according to the embodiments may be encoded separately from the geometry encoding and/or the attribute encoding. The signaling information according to the embodiments may be interleaved.

The color transform processor 12008, the attribute transform processor 12009, the prediction/lifting/RAHT transform processor 12010, and the arithmetic coder 12011 perform the attribute encoding. The attribute encoding according to the embodiments is the same as or similar to the attribute encoding described with reference to FIGS. 1 to 9, and thus a detailed description thereof is omitted.

The color transform processor 12008 according to the embodiments performs color transform coding to transform color values included in attributes. The color transform processor 12008 may perform color transform coding based on the reconstructed geometry. The reconstructed geometry is the same as described with reference to FIGS. 1 to 9. Also, it performs an operation and/or method the same as or similar to the operation and/or method of the color transformer 40006 described with reference to FIG. 4 is performed. The detailed description thereof is omitted.

The attribute transform processor 12009 according to the embodiments performs attribute transformation to transform the attributes based on the reconstructed geometry and/or the positions on which geometry encoding is not performed. The attribute transform processor 12009 performs an operation and/or method the same as or similar to the operation and/or method of the attribute transformer 40007 described with reference to FIG. 4. The detailed description thereof is omitted. The prediction/lifting/RAHT transform processor 12010 according to the embodiments may code the transformed attributes by any one or a combination of RAHT coding, prediction transform coding, and lifting transform coding. The prediction/lifting/RAHT transform processor 12010 performs at least one of the operations the same as or similar to the operations of the RAHT transformer 40008, the LOD generator 40009, and the lifting transformer 40010 described with reference to FIG. 4. In addition, the prediction transform coding, the lifting transform coding, and the RAHT transform coding are the same as those described with reference to FIGS. 1 to 9, and thus a detailed description thereof is omitted.

The arithmetic coder 12011 according to the embodiments may encode the coded attributes based on the arithmetic coding. The arithmetic coder 12011 performs an operation and/or method the same as or similar to the operation and/or method of the arithmetic encoder 400012.

The transmission processor 12012 according to the embodiments may transmit each bitstream containing encoded geometry and/or encoded attributes and metadata information, or transmit one bitstream configured with the encoded geometry and/or the encoded attributes and the metadata information. When the encoded geometry and/or the encoded attributes and the metadata information according to the embodiments are configured into one bitstream, the bitstream may include one or more sub-bitstreams. The bitstream according to the embodiments may contain signaling information including a sequence parameter set (SPS) for signaling of a sequence level, a geometry parameter set (GPS) for signaling of geometry information coding, an attribute parameter set (APS) for signaling of attribute information coding, and a tile parameter set (TPS) for signaling of a tile level, and slice data. The slice data may include information about one or more slices. One slice according to embodiments may include one geometry bitstream Geom00 and one or more attribute bitstreams Attr00 and Attr10.

A slice refers to a series of syntax elements representing the entirety or part of a coded point cloud frame.

The TPS according to the embodiments may include information about each tile (for example, coordinate information and height/size information about a bounding box) for one or more tiles. The geometry bitstream may contain a header and a payload. The header of the geometry bitstream according to the embodiments may contain a parameter set identifier (geom_parameter_set_id), a tile identifier (geom_tile_id) and a slice identifier (geom_slice_id) included in the GPS, and information about the data contained in the payload. As described above, the metadata processor 12007 according to the embodiments may generate and/or process the signaling information and transmit the same to the transmission processor 12012. According to embodiments, the elements to perform geometry encoding and the elements to perform attribute encoding may share data/information with each other as indicated by dotted lines. The transmission processor 12012 according to the embodiments may perform an operation and/or transmission method the same as or similar to the operation and/or transmission method of the transmitter 10003. Details are the same as those described with reference to FIGS. 1 and 2, and thus a description thereof is omitted.

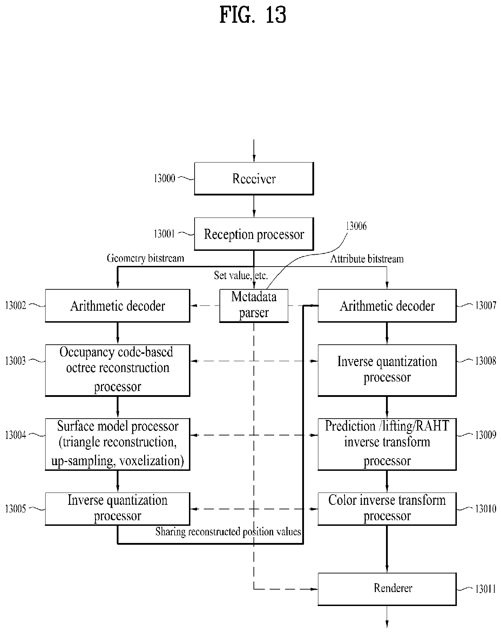

FIG. 13 illustrates a reception device according to embodiments.

The reception device illustrated in FIG. 13 is an example of the reception device 10004 of FIG. 1 (or the point cloud decoder of FIGS. 10 and 11). The reception device illustrated in FIG. 13 may perform one or more of the operations and methods the same as or similar to those of the point cloud decoder described with reference to FIGS. 1 to 11.

The reception device according to the embodiment may include a receiver 13000, a reception processor 13001, an arithmetic decoder 13002, an occupancy code-based octree reconstruction processor 13003, a surface model processor (triangle reconstruction, up-sampling, voxelization) 13004, an inverse quantization processor 13005, a metadata parser 13006, an arithmetic decoder 13007, an inverse quantization processor 13008, a prediction /lifting/RAHT inverse transform processor 13009, a color inverse transform processor 13010, and/or a renderer 13011. Each element for decoding according to the embodiments may perform a reverse process of the operation of a corresponding element for encoding according to the embodiments.

The receiver 13000 according to the embodiments receives point cloud data. The receiver 13000 may perform an operation and/or reception method the same as or similar to the operation and/or reception method of the receiver 10005 of FIG. 1. A detailed description thereof is omitted.

The reception processor 13001 according to the embodiments may acquire a geometry bitstream and/or an attribute bitstream from the received data. The reception processor 13001 may be included in the receiver 13000.

The arithmetic decoder 13002, the occupancy code-based octree reconstruction processor 13003, the surface model processor 13004, and the inverse quantization processor 1305 may perform geometry decoding. The geometry decoding according to embodiments is the same as or similar to the geometry decoding described with reference to FIGS. 1 to 10, and thus a detailed description thereof is omitted.

The arithmetic decoder 13002 according to the embodiments may decode the geometry bitstream based on arithmetic coding. The arithmetic decoder 13002 performs an operation and/or coding the same as or similar to the operation and/or coding of the arithmetic decoder 11000.

The occupancy code-based octree reconstruction processor 13003 according to the embodiments may reconstruct an octree by acquiring an occupancy code from the decoded geometry bitstream (or information about the geometry secured as a result of decoding). The occupancy code-based octree reconstruction processor 13003 performs an operation and/or method the same as or similar to the operation and/or octree generation method of the octree synthesizer 11001. When the trisoup geometry encoding is applied, the surface model processor 13004 according to the embodiments may perform trisoup geometry decoding and related geometry reconstruction (for example, triangle reconstruction, upsampling, voxelization) based on the surface model method. The surface model processor 13004 performs an operation the same as or similar to that of the surface approximation synthesizer 11002 and/or the geometry reconstructor 11003.

The inverse quantization processor 13005 according to the embodiments may inversely quantize the decoded geometry.

The metadata parser 13006 according to the embodiments may parse metadata contained in the received point cloud data, for example, a set value. The metadata parser 13006 may pass the metadata to geometry decoding and/or attribute decoding. The metadata is the same as that described with reference to FIG. 12, and thus a detailed description thereof is omitted.

The arithmetic decoder 13007, the inverse quantization processor 13008, the prediction/lifting/RAHT inverse transform processor 13009 and the color inverse transform processor 13010 perform attribute decoding. The attribute decoding is the same as or similar to the attribute decoding described with reference to FIGS. 1 to 10, and thus a detailed description thereof is omitted.

The arithmetic decoder 13007 according to the embodiments may decode the attribute bitstream by arithmetic coding. The arithmetic decoder 13007 may decode the attribute bitstream based on the reconstructed geometry. The arithmetic decoder 13007 performs an operation and/or coding the same as or similar to the operation and/or coding of the arithmetic decoder 11005.

The inverse quantization processor 13008 according to the embodiments may inversely quantize the decoded attribute bitstream. The inverse quantization processor 13008 performs an operation and/or method the same as or similar to the operation and/or inverse quantization method of the inverse quantizer 11006.

The prediction/lifting/RAHT inverse transform processor 13009 according to the embodiments may process the reconstructed geometry and the inversely quantized attributes. The prediction/lifting/RAHT inverse transform processor 13009 performs one or more of operations and/or decoding the same as or similar to the operations and/or decoding of the RAHT transformer 11007, the LOD generator 11008, and/or the inverse lifter 11009. The color inverse transform processor 13010 according to the embodiments performs inverse transform coding to inversely transform color values (or textures) included in the decoded attributes. The color inverse transform processor 13010 performs an operation and/or inverse transform coding the same as or similar to the operation and/or inverse transform coding of the color inverse transformer 11010. The renderer 13011 according to the embodiments may render the point cloud data.

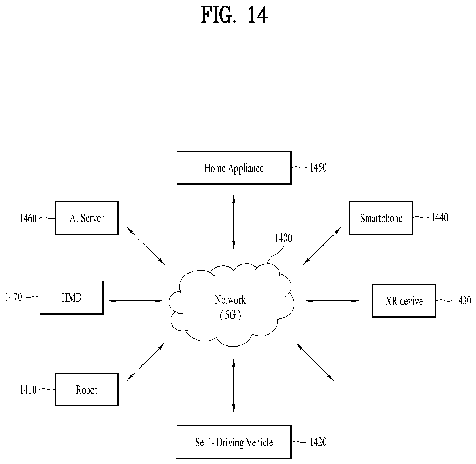

FIG. 14 illustrates an exemplary structure operable in connection with point cloud data transmission/reception methods/devices according to embodiments.

The structure of FIG. 14 represents a configuration in which at least one of a server 1460, a robot 1410, a self-driving vehicle 1420, an XR device 1430, a smartphone 1440, a home appliance 1450, and/or a head-mount display (HMD) 1470 is connected to the cloud network 1400. The robot 1410, the self-driving vehicle 1420, the XR device 1430, the smartphone 1440, or the home appliance 1450 is called a device. Further, the XR device 1430 may correspond to a point cloud data (PCC) device according to embodiments or may be operatively connected to the PCC device.

The cloud network 1400 may represent a network that constitutes part of the cloud computing infrastructure or is present in the cloud computing infrastructure. Here, the cloud network 1400 may be configured using a 3G network, 4G or Long Term Evolution (LTE) network, or a 5G network.

The server 1460 may be connected to at least one of the robot 1410, the self-driving vehicle 1420, the XR device 1430, the smartphone 1440, the home appliance 1450, and/or the HMD 1470 over the cloud network 1400 and may assist in at least a part of the processing of the connected devices 1410 to 1470.

The HMD 1470 represents one of the implementation types of the XR device and/or the PCC device according to the embodiments. The HMD type device according to the embodiments includes a communication unit, a control unit, a memory, an I/O unit, a sensor unit, and a power supply unit.

Hereinafter, various embodiments of the devices 1410 to 1450 to which the above-described technology is applied will be described. The devices 1410 to 1450 illustrated in FIG. 14 may be operatively connected/coupled to a point cloud data transmission/reception device according to the above-described embodiments.

<PCC+XR>

The XR/PCC device 1430 may employ PCC technology and/or XR (AR+VR) technology, and may be implemented as an HMD, a head-up display (HUD) provided in a vehicle, a television, a mobile phone, a smartphone, a computer, a wearable device, a home appliance, a digital signage, a vehicle, a stationary robot, or a mobile robot.

The XR/PCC device 1430 may analyze 3D point cloud data or image data acquired through various sensors or from an external device and generate position data and attribute data about 3D points. Thereby, the XR/PCC device 1430 may acquire information about the surrounding space or a real object, and render and output an XR object. For example, the XR/PCC device 1430 may match an XR object including auxiliary information about a recognized object with the recognized object and output the matched XR object.

<PCC+XR+Mobile phone>

The XR/PCC device 1430 may be implemented as a mobile phone 1440 by applying PCC technology.

The mobile phone 1440 may decode and display point cloud content based on the PCC technology.

<PCC+Self-driving+XR>

The self-driving vehicle 1420 may be implemented as a mobile robot, a vehicle, an unmanned aerial vehicle, or the like by applying the PCC technology and the XR technology.

The self-driving vehicle 1420 to which the XR/PCC technology is applied may represent a self-driving vehicle provided with means for providing an XR image, or a self-driving vehicle that is a target of control/interaction in the XR image. In particular, the self-driving vehicle 1420 which is a target of control/interaction in the XR image may be distinguished from the XR device 1430 and may be operatively connected thereto.

The self-driving vehicle 1420 having means for providing an XR/PCC image may acquire sensor information from sensors including a camera, and output the generated XR/PCC image based on the acquired sensor information. For example, the self-driving vehicle 1420 may have an HUD and output an XR/PCC image thereto, thereby providing an occupant with an XR/PCC object corresponding to a real object or an object present on the screen.

When the XR/PCC object is output to the HUD, at least a part of the XR/PCC object may be output to overlap the real object to which the occupant's eyes are directed. On the other hand, when the XR/PCC object is output on a display provided inside the self-driving vehicle, at least a part of the XR/PCC object may be output to overlap an object on the screen. For example, the self-driving vehicle 1220 may output XR/PCC objects corresponding to objects such as a road, another vehicle, a traffic light, a traffic sign, a two-wheeled vehicle, a pedestrian, and a building.

The virtual reality (VR) technology, the augmented reality (AR) technology, the mixed reality (MR) technology and/or the point cloud compression (PCC) technology according to the embodiments are applicable to various devices.

In other words, the VR technology is a display technology that provides only CG images of real-world objects, backgrounds, and the like. On the other hand, the AR technology refers to a technology that shows a virtually created CG image on the image of a real object. The MR technology is similar to the AR technology described above in that virtual objects to be shown are mixed and combined with the real world. However, the MR technology differs from the AR technology in that the AR technology makes a clear distinction between a real object and a virtual object created as a CG image and uses virtual objects as complementary objects for real objects, whereas the MR technology treats virtual objects as objects having equivalent characteristics as real objects. More specifically, an example of MR technology applications is a hologram service.

Recently, the VR, AR, and MR technologies are sometimes referred to as extended reality (XR) technology rather than being clearly distinguished from each other. Accordingly, embodiments of the present disclosure are applicable to any of the VR, AR, MR, and XR technologies. The encoding/decoding based on PCC, V-PCC, and G-PCC techniques is applicable to such technologies.

The PCC method/device according to the embodiments may be applied to a vehicle that provides a self-driving service.

A vehicle that provides the self-driving service is connected to a PCC device for wired/wireless communication.

When the point cloud data (PCC) transmission/reception device according to the embodiments is connected to a vehicle for wired/wireless communication, the device may receive/process content data related to an AR/VR/PCC service, which may be provided together with the self-driving service, and transmit the same to the vehicle. In the case where the PCC transmission/reception device is mounted on a vehicle, the PCC transmission/reception device may receive/process content data related to the AR/VR/PCC service according to a user input signal input through a user interface device and provide the same to the user. The vehicle or the user interface device according to the embodiments may receive a user input signal. The user input signal according to the embodiments may include a signal indicating the self-driving service.

As described with reference to FIGS. 1 to 14, the point cloud data may include a set of points, and each point may have geometry information and attribute information. The geometry information represents three-dimensional (3D) position information (e.g., coordinate values of X, Y, and Z axes) of each point. That is, the position of each point is represented by parameters in a coordinate system representing a 3D space (e.g., parameters (x, y, z) of three axes, i.e., X, Y, and Z axes, representing a space). The attribute information may represent color (RGB or YUV), reflectance, normal vectors, transparency, etc. of a point. The attribute information may be expressed in a scalar or vector form. The geometry information may be referred to as a geometry, geometry data, or a geometry bitstream. The attribute information may be referred to as an attribute, attribute data, or an attribute bitstream.

According to embodiments, the point cloud data may be classified into category 1 of static point cloud data, category 2 of dynamic point cloud data, and category 3 acquired through dynamic movement, depending on the type and acquisition method of the point cloud data. Category 1 is composed of a point cloud of a single frame with a high density of points for an object or space. Data of category 3 may be divided into frame-based data having multiple frames acquired through movement and fused data of a single frame obtained by matching a point cloud acquired through a LiDAR sensor and a color image acquired as a 2D image for a large space.

According to embodiments, in order to efficiently compress 3D point cloud data having multiple frames according to time, such as frame-based point cloud data having multiple frames, inter-prediction coding/decoding may be used. Inter-prediction coding/decoding may be applied to the geometry information and/or the attribute information. Inter-prediction may be referred to as inter-picture prediction or inter-frame prediction, and intra-prediction may be referred to as intra-picture prediction.

According to embodiments, a point cloud data transmission and reception device/method is capable of performing multi-directional prediction between multiple frames. The point cloud data transmission and reception device/method may separate a coded order and a display order of the frames and predict point cloud data according to a determined coded order. The point cloud data transmission and reception device/method according to the embodiments may perform inter-prediction based on a predictive tree through multiple reference frames.

The point cloud data transmission and reception device/method according to the embodiments may define a prediction unit in order to apply prediction technology between multiple frames as a method for increasing compression efficiency of point cloud data having one or more frames. The prediction unit according to embodiments may be referred to by various terms such as a unit, a first unit, a region, a first region, a box, a zone, a unit, etc.

Point cloud data according to embodiments includes a plurality of frames. The frames may be referred to as a group of frames (GOF). In the transmission and reception device/method according to the embodiments, a frame on which encoding or decoding is performed may be referred to as a current frame, and a frame referenced in order to encode or decode the current frame may be referred to as a reference frame.

A predictive value or a predictor according to embodiments may be referred to as a candidate point for predicting a current point.

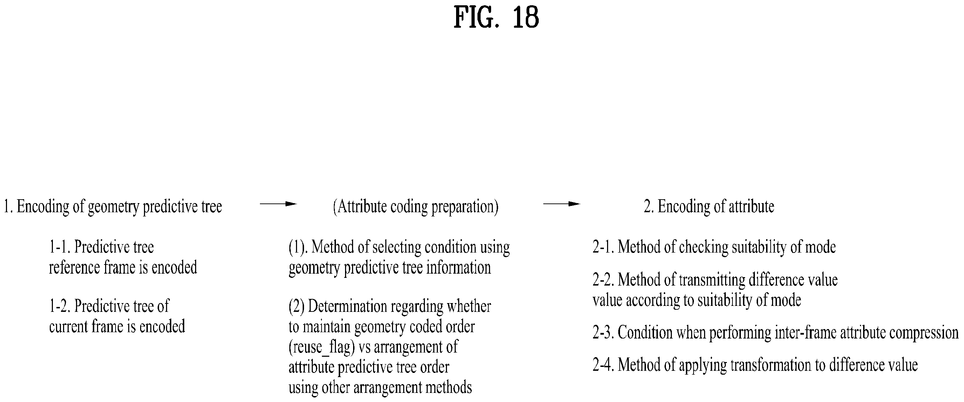

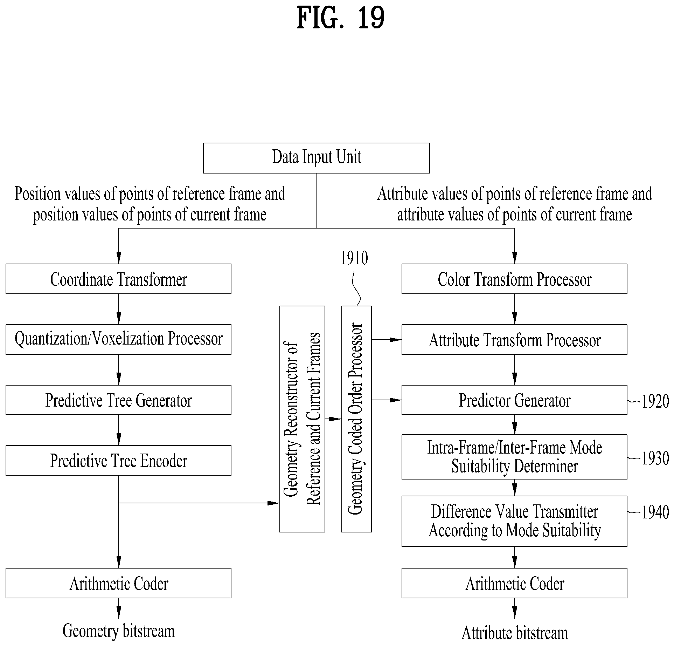

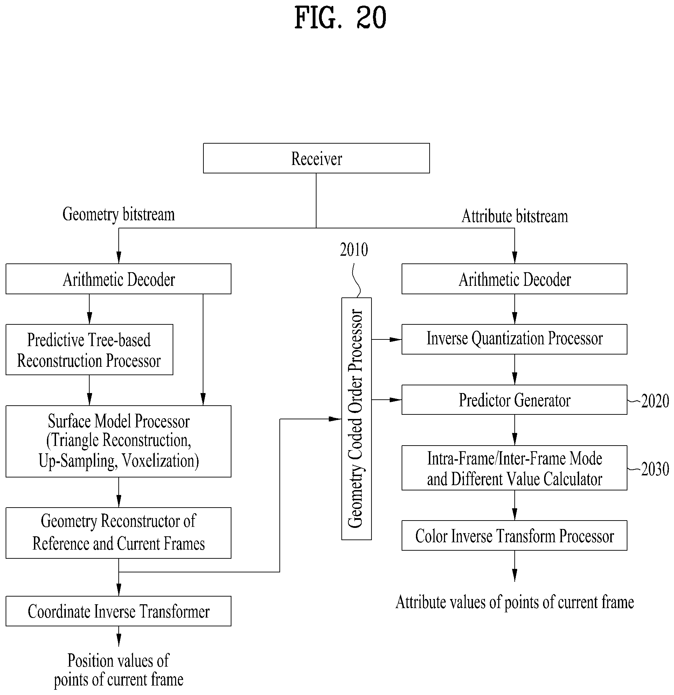

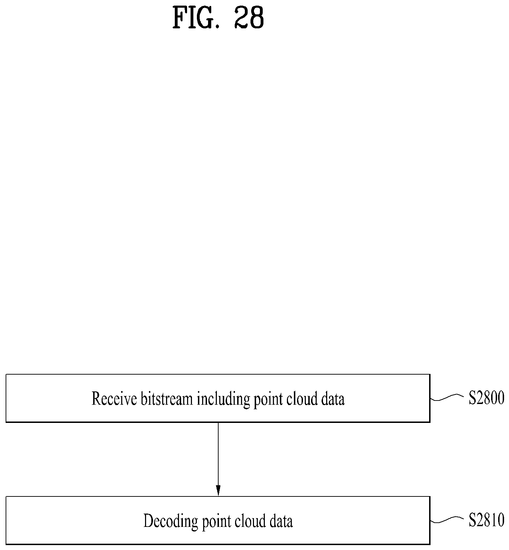

The transmission and reception device/method according to the embodiments may be implemented by the transmission and reception device in FIG. 1, transmission and reception in FIG. 2, the point cloud encoder of FIG. 4, the point cloud decoders of FIGS. 10 and 11, the transmission device of FIG. 12, the reception device of FIG. 13, the devices in FIG. 14, an encoding process of FIG. 18, a transmission device/method of FIG. 19, a reception device/method of FIG. 20, a transmission method of FIG. 27, or a reception method of FIG. 28, and/or hardware including one or more processors or integrated circuits configured to communicate with one or more memories, software, firmware, or a combination of hardware, software, and firmware.

FIG. 15 illustrates a predictive tree structure according to embodiments.

FIG. 15 illustrates an example of generating a predictive tree structure, calculating a predictive value, and performing encoding according to a coded order in a point cloud data transmission and reception device/method according to embodiments.

Generation of the predictive tree structure according to the embodiments may be performed by a predictive tree generator in FIG. 19.

A predictive tree is generated by considering relations between points based on coordinate values of x, y, and z of a point. Input point cloud data (Ply) is sorted according to a specific criterion, and the predictive tree generator (see FIG. 19) searches for a nearby point based on sorted points (Ply), calculates a predictive value of a node (point) according to a predictive mode, and generates a predictive tree structure. A predictive value of each point may be calculated using a predictive calculation equation (or predictive mode) based on the generated predictive tree structure. A predictive tree encoder (see FIG. 19) may encode a difference value of the predictive value of each point and the predictive mode according to the coded order in an encoding process and transmit encoded point cloud data to a reception device as a bitstream through a transmitter.

The reception device (see FIG. 20) according to embodiments receives a bitstream including point cloud data and decodes encoded point cloud data. The reception device (see FIG. 20) according to the embodiments may receive the bitstream including the point cloud data and reconstruct a position value of a point through the difference value of the predictive value of each point and the predictive mode.

The point cloud data transmission and reception device/method according to the embodiments may sort point cloud data, form a predictive tree, and calculate and encode a predictive value, as shown in FIG. 15.

The point cloud data transmission and reception device/method according to the embodiments may use predictive tree information generated based on position values (or geometry) for inter-frame attribute compression.

The point cloud data transmission and reception device/method according to the embodiments may propose a structure capable of performing attribute compression using inter-frame geometry information in order to compress 3D point cloud data. Dynamic point cloud classified as Category 3 in point cloud data is composed of multiple point cloud frames and is mainly aimed at use cases related to autonomous driving data.

A set of frames according to embodiments is called a sequence, and one sequence includes frames having the same attribute values. Point cloud data according to embodiments may have data characteristics such as movement or attribute value changes between a previous frame and a subsequent frame.

The transmission and reception device/method according to the embodiments proposes a structure and method that may use inter-frame features found in geometry information even for attribute compression with the goal of inter-frame compression in a sequence of Category 3. Inter-frame geometry compression may be largely performed by octree inter-frame compression and predictive tree inter-frame compression. The transmission and reception device/method according to the embodiments may use, for attribute compression, information used in predictive tree inter-frame geometry compression. Additionally, points that are not suitable for inter-frame information may be subjected to attribute compression using intra-frame geometry information to increase compression efficiency.

The generation of the predictive tree structure of FIG. 15 represents a process of generating a tree structure with a connection relation between points from coordinates of x, y, and z of a point cloud. The predictive tree structure may be generated by sorting input points based on a specific criterion and calculating a predictive value according to a neighboring point (node) from the sorted points (Ply).

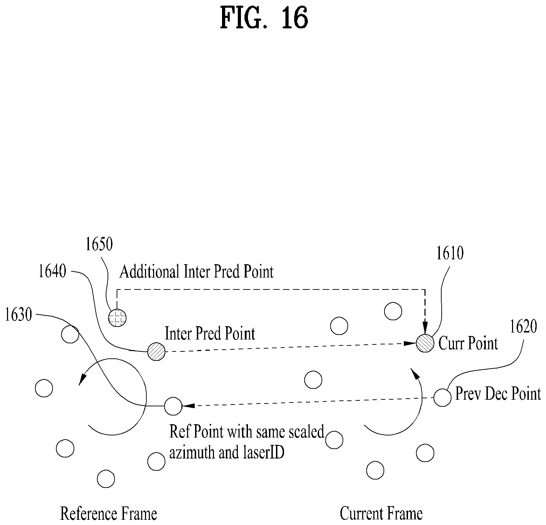

FIG. 16 illustrates inter-frame reference prediction according to embodiments.

The transmission and reception device/method according to the embodiments may perform inter-picture prediction (inter-prediction) when generating a predictive tree structure for predicting point cloud data. In the predictive tree structure, during inter-prediction, a frame coded prior to a current frame is determined as a reference frame, and a point 1630 that has the most similar azimuth to and the same laser ID (laserID) as a point 1620 which is decoded prior to a current point in the current frame is selected from among points of the reference frame. Then, a point 1640, which is closest to the point 1630, or a point 1650, which is the next closest to the point 1630, among points with a larger azimuth than an azimuth of the point 1630, may be determined as a predictive value or predictor of the current point 1610.

The transmission and reception device/method according to the embodiments proposes an inter-frame reference structure using a first predictive point (inter-predictive point) and/or a second predictive point (additional inter-predictive point) in a reference frame in order to perform inter-frame predictive tree-based compression.

The transmission and reception device/method according to the embodiments performs geometry compression and then performs attribute compression using prediction/lifting/RAHT transform coding, thereby performing intra-frame coding. The transmission and reception device/method according to the embodiments may use prediction/lifting/RAHT transform coding by combining a previous frame and a current frame into one frame when performing inter-frame encoding/decoding and has a compression efficiency of about 5% compared to intra-frame coding.

In the transmission and reception device/method according to embodiments, whether to generate a predictive tree at a receiving side may be determined depending on whether to maintain a geometry coded order.

The transmission and reception device/method according to the embodiments may propose a different coding method depending on whether a geometry coded order is maintained. Unlike simply combining two frames and coding the frames into one frame, inter-frame predictive tree information may be used for attribute compression as decoded information. The transmission and reception device/method according to the embodiments may solve a problem that Morton generation and neighbor node search processes during intra-frame compression overlap with predictive tree information generated based on a geometry. The transmission and reception device/method according to the embodiments allow information generated from a distance-based predictive tree to be maximally utilized in attribute compression.

The geometry coded order according to embodiments may be maintained or rearranged (or resorted) in attribute compression. When the geometry coded order is maintained, a rearrangement time at an encoder (or transmission device) and a decoder (or reception device) may be shortened. When the geometry coded order is not maintained and is rearranged based on a specific criterion, data compression rate in the encoder and decoder may increase. Therefore, whether to maintain the geometry coded order may be determined depending on the compression execution time and compression efficiency of the encoder and the decoder.

The transmission and reception device/method according to the embodiments may perform attribute coding in a Morton order by rearranging the geometry order when performing prediction transform, lifting transform, and RAHT coding used for attribute compression. On the other hand, in predictive geometry coding, a predictive tree for a parent-child relation between adjacent points is formed, and on the premise that an attribute value between points is encoded based on a previous point, attribute coding may be performed based on predictive tree information after predictive tree geometry coding.

Predictive tree geometry coding according to embodiments generates a parent-child relation between points (or nodes) and calculates a predictive value for each point. Calculation of the predictive value may be determined by an order of sorted points and a position value of a close point in the order of the sorted points. The predictive value may be calculated based on the position value of a parent point p0, a grandparent point p1, or a great-grandparent point p2 relative to a current point. In predictive tree coding, methods of calculating predictive values of points may include four intra-frame calculation methods and two inter-frame calculation methods below. A parent-child relation between points may be referred to as an upper-lower relation between points. One parent point may be connected to multiple child points as a parent-child relation.

Point predictive value calculation method (intra-frame calculation method) or predictive mode

p0 may be the position of a parent point relative to a current point, p1 may be the position of a grandparent point, and p2 may be the position of a great-grandparent point.

No prediction
Delta prediction (p0)
Linear prediction (2p0-p1)
Parallelogram prediction (p0+p1-p2)

Point predictive value calculation method (inter-frame calculation method) or predictive mode

Inter-predictive point (p'0)
Additional inter-predictive point (p'1)

The inter-predictive point (1640, FIG. 16) may be a point with the same laserID value as the current point 1610 in a decoded reference frame and the most similar azimuth value to the current point 1610. The additional inter-predictive point (1650, FIG. 16) may be a point with a smaller azimuth value than the inter-predictive point 1640 and the same laserID as the inter-predictive point 1640.

An order in which geometry coding is performed based on a predictive tree according to embodiments is called a coded order, and decoding may be performed in an order in which the coded order is received from a decoder.

The transmission and reception device/method according to the embodiments may perform intra-frame/inter-frame attribute compression using a geometry predictive tree in relation to point cloud data. For inter-frame attribute compression, points with necessary geometry information may be selected from intra-frame information and inter-frame information and conditions that may be used for compression may be presented. Additionally, an attribute compression method may be proposed by extending existing predictive tree intra-frame geometry compression.

The transmission and reception device/method according to the embodiments proposes the attribute compression method after intra-frame/inter-frame geometry compression.

In addition, the transmission and reception device/method according to the embodiments proposes the attribute compression method using a geometry coded order. The transmission and reception device/method according to the embodiments may propose generation of a predictor, check of suitability of a predictive mode, transmission of a difference value according to suitability of the predictive mode, or conditions when inter-frame attribute compression is performed.

The transmission and reception device/method according to the embodiments enables a decoder to perform substantially low-latency attribute compression if low-latency geometry compression and low-latency attribute compression are performed on a point-by-point basis.

Inter-frame attribute compression using geometry predictive tree

The transmission and reception device/method according to the embodiments may perform intra-frame geometry compression using a predictive tree. An inter-frame geometry compression method using the predictive tree may select a mode according to a calculation equation with reference to up to three previously decoded points in a reference frame of a current frame and signal the selected mode to the decoder (see FIG. 16).

In this case, the inter-predictive point 1640 (FIG. 16), in the reference frame, corresponding to the current point 1610 may be selected as a point with the closest geometry value of x, y, and z. Additionally, one point may further be selected. In FIG. 16, the inter-predictive point 1640 and the additional inter-predictive point 1650 may be selected as candidates. When selecting one of the inter-predictive point 1640 and the additional inter-predictive point 1650 as a predictor of the current point 1610, one point with a small difference value from an original value may be selected. The transmission and reception device/method according to the embodiments may perform inter-frame geometry prediction coding using up to three previously decoded points in the reference frame as predictors based on a point selected in the reference frame.

The transmission and reception device/method according to the embodiments may perform the attribute compression method using the inter-predictive point 1640 and the additional inter-predictive point 1650. The transmission and reception device/method according to the embodiments may determine a point (an inter-predictive point or additional inter-predictive point) selected in the reference frame as a predictive point or determine another point as a reference point. The reference point may be selected as 1. a point with a short Euclidean distance of x, y, and z, 2. a point with a short distance of r, Φ, or θ after conversion into a spherical coordinate system, 3. a point with a similar already decoded attribute value among attribute information, 4. a point in the same order among points with the same laserID, between a current point and a predictive point, or 5. a point selected using the other methods. The predictor may be selected with reference to an attribute value already decoded from color, reflectance, opacity, a normal vector, or attribute_label_oid among attribute values constituting a point cloud.

The predictor may be referred to as a predictive point, a reference point, etc., and may be calculated as a point or a combination of points, selected to predict the current point.

Attribute compression using geometry coded order

The transmission and reception device/method according to the embodiments may use x, y, and z coordinates maintaining the geometry coded order for attribute coding. As an octree geometry coded order corresponds to a Morton order, the geometry coded order of a predictive tree appears to be similar to an azimuth sorted order. If attribute information is encoded by maintaining the geometry coded order compressed using a predictive tree, delay due to rearranging an order in a geometry encoder, an attribute encoder, a geometry decoder, and an attribute decoder may be reduced.

When the geometry coded order is not used, point cloud data may be sorted based on an azimuth/radius/elevation or laserID value and then attribute coding may be performed. If the geometry coded order is not used, geometry information, which is an input value for attribute coding, may be replaced with a quantized value of a cylindrical coordinate system or a spherical coordinate system to perform arrangement. When the geometry information is replaced with the quantized value of the cylindrical coordinate system or the spherical coordinate system, conversion is as follows.

$$\{Q_a(r\cos\theta), Q_b(r\sin\theta), Q_c(z)\}$$
$$\{Q_a(x^2 + y^2), Q_b\left(\arctan(\frac{y}{x})\right), Q_c(z)\}$$
$$\{Q_a(x^2 + y^2 + z^2), Q_b\left(\arccos(\frac{y}{r})\right), Q_c\left(\arctan(\frac{y}{x})\right)\}$$

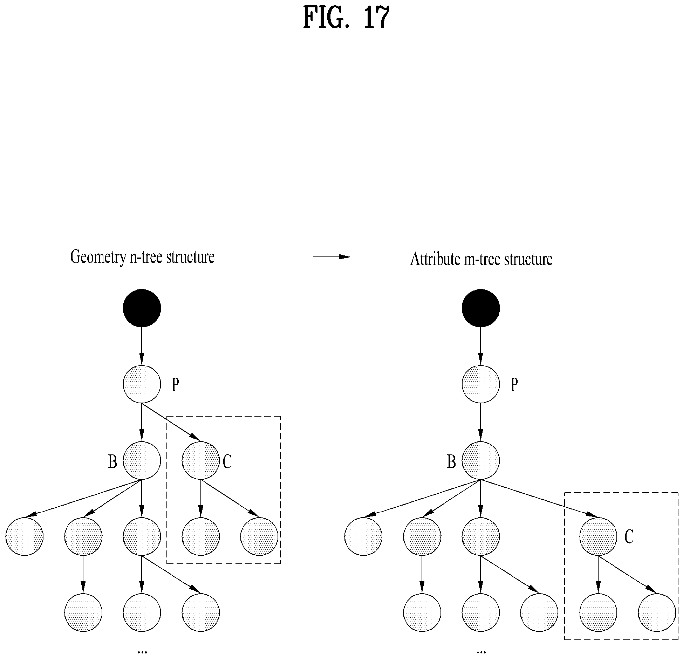

FIG. 17 illustrates change of a predictive tree according to embodiments.

The transmission and reception device/method according to the embodiments may change a predictive tree structure generated using geometry information to suit attribute information. The changed predictive tree structure may be used for attribute information compression.

Condition selection using geometry predictive tree information

The transmission and reception device/method according to the embodiments may use two different types of information in relation to geometry predictive tree information for attribute compression.

1. Attribute relation search using parent-child relation of predictive tree

The transmission and reception device/method may use a parent-child relation of a predictive tree structure generated using a geometry for attribute information compression. In this case, n-tree may be generated using a parent node (or point) index of each point, the number of child nodes of each point, and indexes of the child nodes of each point. If the maximum number of child nodes of the geometry is n, m-tree with m child nodes may be regenerated for attribute information compression. As shown in FIG. 17, the transmission and reception device/method may generate m-tree of an attribute using n-tree information of the geometry.

After geometry compression for a current point C (see FIG. 17) is completed, the transmission and reception device/method may check whether a predictive tree (n-tree structure in FIG. 17) has a structure suitable for attribute compression.

Referring to FIG. 17, a threshold value on a K-D tree is selected to select the node C as a child node of P in a predictive tree (n-tree in FIG. 17). However, in the m-tree of the attribute, the parent of the node C may be changed to a node B using another threshold. In other words, a predictive tree structure may be changed.

A threshold for generating the m-tree during attribute compression may be determined according to precision of attribute information and geometry information and may be determined according to the following equation.

$$A_{th} = G_{th} \bullet \frac{A_p}{G_p}$$

A_th: attribute threshold

G_th: geometry threshold
A_p: attribute precision
G_p: geometry precision

The tree structure (m-tree) for attribute information compression may be configured differently depending on the number of attributes. For example, in the case of a point with color and reflectance information as attribute information, another tree structure (e.g., m'-tree) may be generated, and a threshold value for tree generation may be calculated differently.

The transmission and reception device/method according to the embodiments may use, for attribute encoding, a predictive tree structure generated during geometry encoding. The tree structure may be used without change or may be changed through suitability check. When the tree structure is changed, an attribute threshold for generating a tree may be calculated based on a geometry threshold, attribute precision, and geometry precision, and the tree structure may be changed based on the attribute threshold. The changed tree structure may be used for attribute encoding.

2. Prediction condition search according to geometry order

Whether to search for a prediction condition for attribute compression without using a geometry predictive tree again may be determined by determining whether a geometry order has a distortion ratio below a threshold. The transmission device (or encoder) according to the embodiments previously calculates a difference between attribute values or an attribute value according to the geometry order using a predictive calculation equation. If a difference value distribution is greater than a threshold, an attribute relation search method using a parent-child relation of a tree may be used. If the difference value is below the threshold, attribute compression according to the geometry order may be used. Whether to perform attribute compression according to the geometry order may be signaled to the decoder.

The transmission and reception device/method according to the embodiments may determine whether to use the geometry coded order without change according to a threshold. When the size or distribution of a residual when predicting an attribute according to the geometry coded order exceeds the threshold, the attribute relation may be searched using the parent-child relation of a tree structure, and if the size or distribution of the residual is below the threshold, the geometry coded order may be used without change.

Generation of a predictor

To perform attribute compression in the transmission and reception device/method, the transmission device (or encoder) may select a previously coded point as a predictor based on a current point, and the reception device (or decoder) may select the same predictor as the predictor selected by the transmission device. Therefore, the transmission device (or encoder) may discern the distribution of attribute values according to the predictor using already decoded geometry information. A geometry coded order may be maintained when a distortion ratio is less than a threshold of the transmission device (or encoder) as a result of comparing a difference value of attribute information according to the geometry coded order with an attribute value of a previous point, an attribute value of a point with a close azimuth based on a geometry value, an attribute value of a point with a close radius based on the geometry value, an attribute value of a point with a close elevation based on the geometry value, an attribute value of a point with the most similar geometry value in a previous frame (or reference frame), or attribute values of other points.

A predictor for each point of a sorted geometry may be generated by considering a distortion ratio of a difference value of attribute information. The predictor may be determined as the average of 4 or 3 values. The predictor may be selected based on an attribute value of a previous point, an attribute value of a point with a close azimuth based on a geometry value, an attribute value of a point with a close radius based on the geometry value, an attribute value of a point with a close elevation based on the geometry value, an attribute value of a point belonging to the same laser ID, an attribute value of a point with the most similar geometry value in a previous frame, or an attribute value using other methods. The selection criterion for generating the predictor may be transmitted to the reception device (or decoder).

The attribute value of a point with a close azimuth based on a geometry value, the attribute value of a point with a close radius based on the geometry value, the attribute value of a point with a close elevation based on the geometry value, or the attribute value of a point belonging to the same laser ID may be selected as the predictor based on a quantized value.

When generating an inter-frame predictor, whether inter-frame prediction has been used may be signaled. If the inter-frame predictor is selected, the predictor may be selected based on one or more combinations of conditions. A condition to which quantization is applied may be used and may be signaled to the decoder. Additionally, when the inter-frame predictor is selected, a point to which motion (global/local motion estimation and compensation) is applied or a point to which motion is not applied may be selected.

Generating or selecting the inter-frame predictor may mean selecting or generating one or more points belonging to a reference frame as the predictor in order to predict a value of a point belonging to a current frame.

The transmission and reception device/method according to the embodiments may select the predictor using a predictive tree structure of a current frame or a predictive tree structure of a previous frame (reference frame). Additionally, the transmission and reception device/method may select the predictor using a generated predictive tree structure without change or using a changed predictive tree structure. The predictor may be selected in various ways and may be selected by one point or a combination of multiple points. The predictor may be used to calculate a predictive value using a specific calculation method by a predictive mode.

Suitability check of predictive mode

The transmission and reception device/method may check suitability of the predictive mode in order to signal a condition selected from a group of predictor candidates. To select a candidate with the smallest difference value from an original value from among four or multiple candidate groups selected as predictors, the suitability of the predictive mode may be checked and selected based on quantized conditions or a difference between original attribute values. Conditions used in a predictor generator (1920 in FIG. 19) are used to determine the suitability of the predictive mode. An attribute value with the smallest difference value or an attribute value with the highest relation to compression of a difference value of a subsequent point even if the different value is not the smallest may be signaled as a mode. An intra-frame or inter-frame mode may be selected by different conditions, and a condition to which global/local motion is not applied may also be selected as a mode.

The transmission and reception device/method according to the embodiments may predict point cloud data using a predictor and a predictive mode and select a predictive mode or a predictor with the smallest difference between a predictive value and an original value among several predictive values. Related information about the predictor or the predictive mode with the smallest residual may be signaled, so that the reception device may restore an original value using the same predictor and predictive mode.

Transmission of difference value according to suitability of predictive mode

The conditions selected by the transmission device (or encoder) are signaled to the reception device (or decoder), and the encoder and decoder calculate a predictive value for each point using the same conditions as the mode. In this case, a difference value according to the predictive mode is transmitted, and a quantized or unquantized value is transmitted to the decoder from the encoder as the difference value. The difference value may be transmitted for each point using an entropy coding method such as exponential Golomb, context-adaptive variable length coding, or context-adaptive binary arithmetic coding and may be encoded for each point group. The difference value may be converted to a bitstream after performing transformation such as DCT, DST, DST, SADCT, and RAHT.

Conditions upon performing inter-frame attribute compression

Inter-frame attribute compression may generate the closest point in a current geometry as a predictor based on distance. When intra-frame attribute compression is performed, search is performed only within a frame when a difference value is below a threshold. If the difference value or distortion ratio exceeds the threshold, a point with the most similar attribute value may be found in a reference frame, and whether search has been performed in the reference frame may be signaled. In this case, if a current frame is a B-frame, only an attribute value in one frame may be selected as the predictor.

The transmission and reception device/method according to the embodiments may generate the predictor by searching for a point in the reference frame if a residual exceeds a threshold or distortion occurs upon predicting point cloud data using the predictor and the predictive mode in a current frame.

FIG. 18 illustrates an encoding process according to embodiments.

FIG. 18 illustrates an attribute compression process using geometry compression according to embodiments.

The encoding process of FIG. 18 may be performed by the transmission device in FIG. 1, transmission in FIG. 2, the point cloud encoder of FIG. 4, the transmission device of FIG. 12, the devices in FIG. 14, the transmission method of FIG. 27, and/or hardware including one or more processors or integrated circuits configured to communicate with one or more memories, software, firmware, or a combination of hardware, software, and firmware.

When encoding a geometry, the transmission and reception device/method may generate a predictive tree using geometry information. Accordingly, information about the predictive tree for each frame is generated, the predictive tree generated from a reference frame is encoded, and the predictive tree generated from a current frame is encoded.

The current frame and the reference frame may be referred to as a first frame and a second frame, respectively. The current frame may represent a frame in which encoding/decoding is being performed, and the reference frame may represent a frame referenced for encoding/decoding of the current frame.

When encoding an attribute, the transmission and reception device/method may determine whether to use predictive tree information generated from the current frame or the reference frame. In addition, a generated predictive tree structure may be used without change or may be used through change to be suitable for attribute information based on a suitability check result.

In addition, the transmission/reception device/method may determine whether to maintain a geometry coded order without change or rearrange the geometry coded order when encoding the attribute. Whether to maintain the geometry coded order may be determined based on the size or distribution of a residual when predicting the attribute information according to the geometry coded order.

The transmission and reception device/method may check suitability of a predictive mode for calculating a predictive value and transmit a difference value according to the suitability of the mode. If the difference value (difference between an original value and the predictive value) is greater than a threshold when calculating the predictive value within a frame, the transmission and reception device/method may calculate the predictive value by selecting an inter-frame predictor.

The transmission and reception device/method may apply transformation to the difference between the predictive value and the original value when performing attribute encoding.

FIG. 19 illustrates a point cloud data transmission device/method according to embodiments.

The transmission and reception device/method according to the embodiments may be implemented by the transmission and reception device in FIG. 1, transmission and reception in FIG. 2, the point cloud encoder of FIG. 4, the point cloud decoders of FIGS. 10 and 11, the transmission device of FIG. 12, the reception device of FIG. 13, the devices in FIG. 14, the encoding process of FIG. 18, the reception device/method of FIG. 20, the transmission method of FIG. 27, or the reception method of FIG. 28, and/or hardware including one or more processors or integrated circuits configured to communicate with one or more memories, software, firmware, or a combination of hardware, software, and firmware.

Whether to perform attribute compression coding using a predictive tree structure according to embodiments may be signaled through use_predictive_tree_in_attribute_flag. Transformation necessary for attribute compression may be performed according to whether attribute compression coding is used.

Whether to use the geometry coded order according to the embodiments may be signaled to the reception device through use_geometry_coded_order_flag. Whether to use the geometry coded order may be signaled as True if a distortion ratio is low and signaled as False if the distortion ratio is high, depending on a threshold in the transmission device (or encoder). In this case, the threshold may be transmitted to the reception device (or decoder) through predictor_distortion_ratio threshold.

The transmission device according to embodiments may transmit conditions selected to generate a predictor to the reception device through a make_predictor parameter. The conditions for generating the predictor are as follows.

0 = Attribute value of a previous point, 1 = attribute value of a point with a close azimuth based on a geometry value, 2 = attribute value of a point with a close radius based on the geometry value, 3 = attribute value of a point with a close elevation based on the geometry value, 4 = attribute value of a point belonging to the same laser ID, 5 = attribute value of a point with the most similar geometry value in a previous frame, 6 = attribute value of a point selected by the other methods.

Further, when selecting the predictor of the attribute value based on the point with the most similar geometry in the previous frame (or reference frame), reference frame_predictor_use flag may be transmitted to the reception device.

A geometry coded order processor 1910 according to embodiments may determine whether to use the geometry coded order without change when an attribute is encoded and rearrange the geometry coded order. Additionally, the geometry coded order processor 1910 may generate signaling information regarding whether the geometry coded order is used without change.

A predictor generator 1920 according to embodiments may select the predictor for predicting an attribute when the attribute is encoded. Additionally, the predictor generator 1920 may generate signaling information regarding a condition for selecting the predictor.

A mode suitability determiner 1930 according to embodiments may calculate a predictive value based on the generated predictor and determine a suitable predictive mode by comparing the predictive value with a residual. Additionally, the mode suitability determiner 1930 may generate signaling information regarding the suitable predictive mode.

A difference value transmitter 1940 according to embodiments may calculate a difference (residual) between the predictive value calculated by the selected predictive mode and an original value.

FIG. 20 illustrates a point cloud data reception device/method according to embodiments.

The transmission and reception device/method according to the embodiments may be implemented by the transmission and reception device in FIG. 1, transmission and reception in FIG. 2, the point cloud encoder of FIG. 4, the point cloud decoders of FIGS. 10 and 11, the transmission device of FIG. 12, the reception device of FIG. 13, the devices in FIG. 14, the encoding process of FIG. 18, the transmission method of FIG. 27, or the reception method of FIG. 28, and/or hardware including one or more processors or integrated circuits configured to communicate with one or more memories, software, firmware, or a combination of hardware, software, and firmware.

The reception device may receive use_predictive_tree_in_attribute_flag from a geometry coded order processor 2010 and perform transformation necessary for attribute compression depending on whether attribute compression coding is used in the same manner as the transmission device.

The geometry coded order processor 2010 according to embodiments may use a geometry coded order without change or rearrange the geometry coded order based on received signaling information.

The reception device may be aware of whether the geometry coded order is used through delivered use_geometry_coded_order_flag information. Additionally, the reception device may select a predictor according to a threshold through predictor distortion_ratio threshold in the same way as the transmission device.

A geometry coded order processor 2020 according to embodiments may select the same predictor as the predictor selected by the transmission device according to the embodiments and perform prediction in the same way as the transmission device.

The reception device may be aware of conditions of a selected candidate (or predictor) using make_predictor information. The conditions are as follows. 0 = Attribute value of a previous point, 1 = attribute value of a point with a close azimuth based on a geometry value, 2 = attribute value of a point with a close radius based on the geometry value, 3 = attribute value of a point with a close elevation based on the geometry value, 4 = attribute value of a point belonging to the same laser ID, 5 = attribute value of a point with the most similar geometry value in a previous frame, 6 = attribute value of a point selected by the other methods.

Therefore, the reception device may generate the predictor in the same way as the transmission device. Additionally, the reception device may perform decoding using reference_frame_predictor_use_flag information indicating whether the predictor is generated from a reference frame.

The mode and difference value calculator 2030 according to embodiments may calculate a predictive value of point cloud data using the predictor or a predictive mode based on received signaling information and reconstruct the point cloud data by summing a received residual.

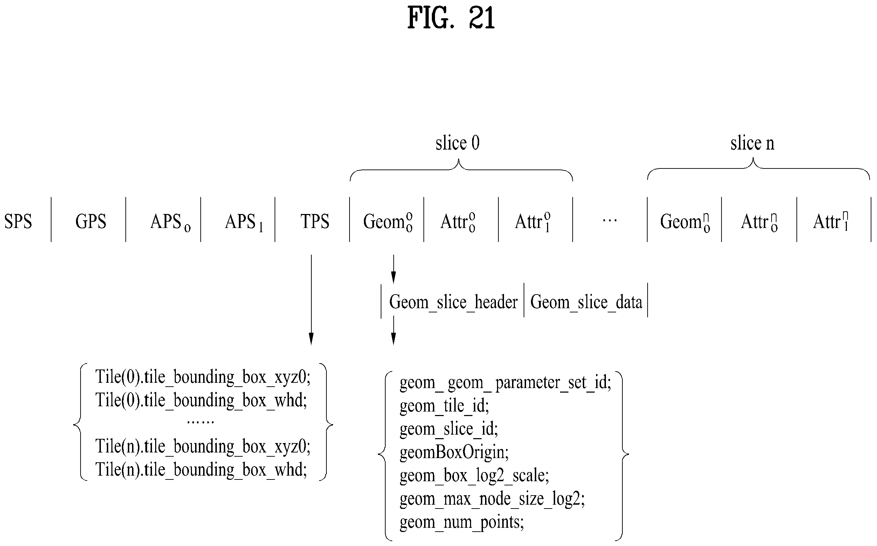

FIG. 21 illustrates an encoded bitstream according to embodiments.

The transmission and reception device/method according to the embodiments may generate/deliver and receive/use information related to intra-frame/inter-frame attribute encoding/decoding using a predictive tree.

A bitstream according to embodiments may be transmitted based on the transmission device 10000 in FIG. 1, the transmission method in FIG. 2, the encoder of FIG. 4, the transmission device of FIG. 12, the devices in FIG. 14, and/or the transmission method/device of FIG. 19. In addition, the bitstream according to the embodiments may be received based on the reception device 20000 in FIG. 1, the reception method in FIG. 2, the decoder of FIG. 11, the reception device of FIG. 13, the devices in FIG. 14, and/or the reception device/method of FIG. 20.

Hereinafter, parameters (referred to as metadata, signaling information, etc.) according to embodiments may be generated in a processor of the transmission device according to embodiments, to be described later, and may be transmitted to a receiver according to embodiments so as to be used in a reconstruction process. For example, the parameters according to the embodiments may be generated in a metadata processor (or metadata generator) of the transmission device according to embodiments, to be described later, and may be obtained by a metadata parser of the reception device according to embodiments.

Abbreviations are as follows

SPS: Sequence Parameter Set
GPS: Geometry Parameter Set
APS: Attribute Parameter Set
TPS: Tile Parameter Set
Geom: Geometry bitstream = Geometry slice header + geometry slice data
Attr: Attribute bitstream = Attribute slice header + attribute slice data

A slice according to embodiments may be referred to as a data unit. A slice header may be referred to as a data unit header. Additionally, the slice may be referred to by other terms having similar meaning, such as a brick, a box, or a region.

A bitstream according to embodiments may provide a tile or a slice so that a point cloud may be divided into regions and processed. When the point cloud is divided into regions, each region may have a different importance level. The transmission device and the reception device according to the embodiments may provide a filtering method having high complexity but high resultant quality for an important region by allowing a different filter or a different filter unit to be applied according to an importance level. In addition, depending on processing capabilities of the reception device, different filtering may be applied to each region (region divided into tiles or slices) instead of using a complicated filtering method for the entire point cloud. Therefore, a more improved image quality in an important region and an appropriate latency in a system may be guaranteed. That is, when a region of the point cloud is divided into tiles, a different filter or a different filter unit may be applied to each tile. When a region of the point cloud is divided into slices, a different filter or a different filter unit may be applied to each slice.

Information related to a predictive tree-based attribute information encoding/decoding method may be applied to each parameter set and signaled.

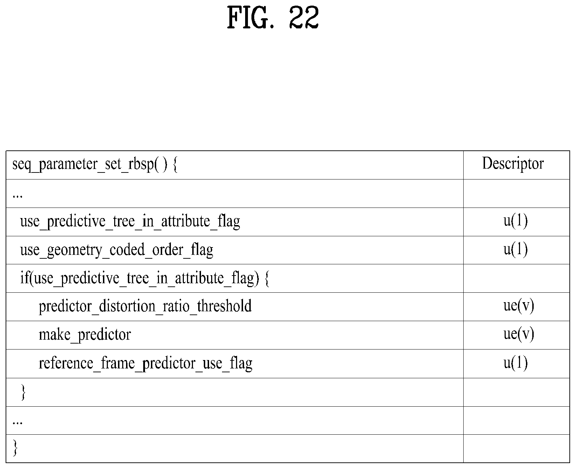

FIG. 22 illustrates a syntax of an SPS (seq_parameter_set) according to embodiments.

Information related to attribute encoding may be added to the SPS and signaled.

Information related to encoding of attribute information according to embodiments may be transmitted and received through the SPS.

use_predictive_tree_in_attribute_flag may indicate whether a predictive tree of a geometry is used for attribute coding and indicate whether transformation required for attribute compression is performed (True = the predictive tree of the geometry is used for attribute compression coding, False = the predictive tree of the geometry is not used for attribute compression coding).

use_geometry_coded_order_flag may indicate whether a coded geometry order is equally used for attribute coding.

predictor distortion_ratio threshold may indicate information as to which criterion is used to sort points of an input point cloud.

make_predictor may indicate a condition selected to generate a predictor.

0 = Attribute value of a previous point, 1 = attribute value of a point with a close azimuth based on a geometry value, 2 = attribute value of a point with a close radius based on the geometry value, 3 = attribute value of a point with a close elevation based on the geometry value, 4 = attribute value of a point belonging to the same laser ID, 5 = attribute value of a point with the most similar geometry value in a previous frame, 6 = attribute value of a point selected by the other methods.

reference_frame_predictor_use_flag may indicate whether the predictor is generated using a reference frame (True = the predictor is generated from the reference frame, False = the predictor is generated from a current frame).

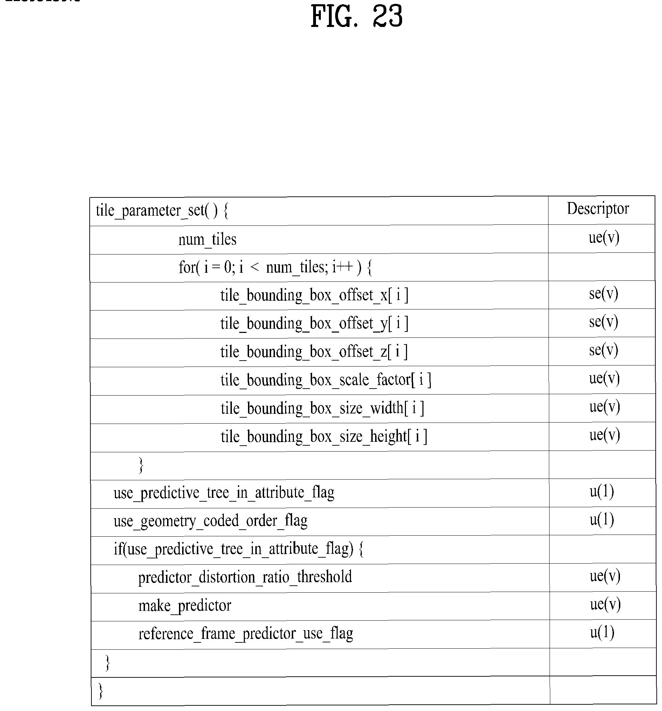

FIG. 23 illustrates a syntax of a TPS (tile_parameter_set) according to embodiments.

Attribute encoding structure information may be added to the TPS and signaled.

The information related to encoding of attribute information according to the embodiments may be transmitted and received through the TPS.

use_predictive_tree_in_attribute_flag may indicate whether a predictive tree of a geometry is used for attribute coding and indicate whether transformation required for attribute compression is performed (True = the predictive tree of the geometry is used for attribute compression coding, False = the predictive tree of the geometry is not used for attribute compression coding).

use_geometry_coded_order_flag may indicate whether a coded geometry order is equally used for attribute coding.

predictor distortion_ratio threshold may indicate information as to which criterion is used to sort points of an input point cloud.

make_predictor may indicate a condition selected to generate a predictor.

0 = Attribute value of a previous point, 1 = attribute value of a point with a close azimuth based on a geometry value, 2 = attribute value of a point with a close radius based on the geometry value, 3 = attribute value of a point with a close elevation based on the geometry value, 4 = attribute value of a point belonging to the same laser ID, 5 = attribute value of a point with the most similar geometry value in a previous frame, 6 = attribute value of a point selected by the other methods.

reference_frame_predictor_use_flag may indicate whether the predictor is generated using a reference frame (True = the predictor is generated from the reference frame, False = the predictor is generated from a current frame).

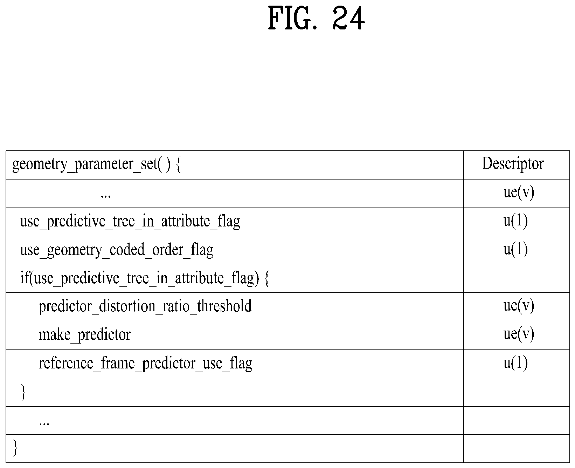

FIG. 24 illustrates a syntax of a GPS (geometry_parameter set) according to embodiments.

The attribute encoding structure information may be added to the GPS and signaled.

The information related to the encoding of attribute information according to embodiments may be transmitted and received through the GPS.

use_predictive_tree_in_attribute_flag may indicate whether a predictive tree of a geometry is used for attribute coding and indicate whether transformation required for attribute compression is performed (True = the predictive tree of the geometry is used for attribute compression coding, False = the predictive tree of the geometry is not used for attribute compression coding).

use_geometry_coded_order_flag may indicate whether a coded geometry order is equally used for attribute coding.

predictor distortion_ratio threshold may indicate information as to which criterion is used to sort points of an input point cloud.

make_predictor may indicate a condition selected to generate a predictor.

0 = Attribute value of a previous point, 1 = attribute value of a point with a close azimuth based on a geometry value, 2 = attribute value of a point with a close radius based on the geometry value, 3 = attribute value of a point with a close elevation based on the geometry value, 4 = attribute value of a point belonging to the same laser ID, 5 = attribute value of a point with the most similar geometry value in a previous frame, 6 = attribute value of a point selected by the other methods.

reference_frame_predictor_use_flag may indicate whether the predictor is generated using a reference frame (True = the predictor is generated from the reference frame, False = the predictor is generated from a current frame).

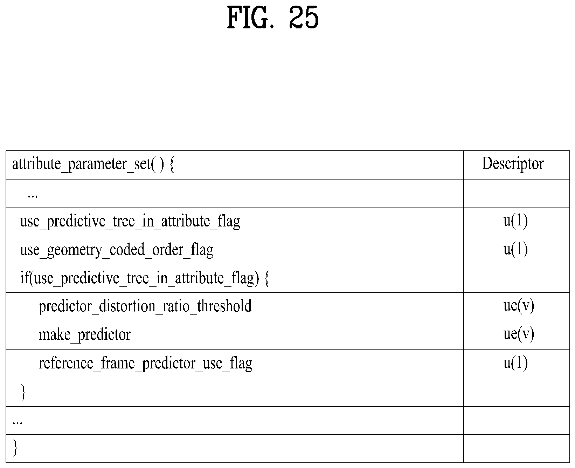

FIG. 25 illustrates a syntax of an APS (attribute_parameter_set) according to embodiments.

The attribute encoding structure information may be added to the APS and signaled.

The information related to encoding of attribute information according to the embodiments may be transmitted and received through the APS.

use_predictive_tree_in_attribute_flag may indicate whether a predictive tree of a geometry is used for attribute coding and indicate whether transformation required for attribute compression is performed (True = the predictive tree of the geometry is used for attribute compression coding, False = the predictive tree of the geometry is not used for attribute compression coding).

use_geometry_coded_order_flag may indicate whether a coded geometry order is equally used for attribute coding.

predictor distortion_ratio threshold may indicate information as to which criterion is used to sort points of an input point cloud.

make_predictor may indicate a condition selected to generate the predictor.

0 = Attribute value of a previous point, 1 = attribute value of a point with a close azimuth based on a geometry value, 2 = attribute value of a point with a close radius based on the geometry value, 3 = attribute value of a point with a close elevation based on the geometry value, 4 = attribute value of a point belonging to the same laser ID, 5 = attribute value of a point with the most similar geometry value in a previous frame, 6 = attribute value of a point selected by the other methods.

reference_frame_predictor_use_flag may indicate whether a predictor is generated using a reference frame (True = the predictor is generated from the reference frame, false = predictor is generated from a current frame).

FIG. 26 illustrates a syntax of a geometry slice header (geometry_slice_header) according to embodiments.

The attribute encoding structure information may be added to a slice header of a Geom and signaled.

The information related to encoding of attribute information according to the embodiments may be transmitted and received through the geometry slice header.

use_predictive_tree_in_attribute_flag may indicate whether a predictive tree of a geometry is used for attribute coding and indicate whether transformation required for attribute compression is performed (True = the predictive tree of the geometry is used for attribute compression coding, False = the predictive tree of the geometry is not used for attribute compression coding).

use_geometry_coded_order_flag may indicate whether a coded geometry order is equally used for attribute coding.

predictor distortion_ratio threshold may indicate information as to which criterion is used to sort points of an input point cloud.

make_predictor may indicate a condition selected to generate a predictor.

0 = Attribute value of a previous point, 1 = attribute value of a point with a close azimuth based on a geometry value, 2 = attribute value of a point with a close radius based on the geometry value, 3 = attribute value of a point with a close elevation based on the geometry value, 4 = attribute value of a point belonging to the same laser ID, 5 = attribute value of a point with the most similar geometry value in a previous frame, 6 = attribute value of a point selected by the other methods.

reference_frame_predictor_use_flag may indicate whether the predictor is generated using a reference frame (True = the predictor is generated from the reference frame, False = predictor is generated from a current frame).

FIG. 27 illustrates a point cloud data transmission method according to embodiments.

The point cloud data transmission method according to the embodiments may be implemented by the transmission device in FIG. 1, the transmission method in FIG. 2, the point cloud encoder of FIG. 4, the transmission device of FIG. 12, the devices in FIG. 14, the encoding method of FIG. 18, and/or hardware including one or more processors or integrated circuits configured to communicate with one or more memories, software, firmware, or a combination of hardware, software, and firmware.

Referring to FIG. 27, the point cloud data transmission method according to the embodiments may include encoding point cloud data (S2700) and transmitting a bitstream including the point cloud data (S2710).

As shown in FIG. 19, the encoding the point cloud data (S2700) may include encoding a geometry and encoding an attribute.

The encoding the geometry may include generating a predictive tree using the geometry and encoding the geometry in a coded order according to the predictive tree.

The predictive tree generator shown in FIG. 19 may generate the predictive tree using the geometry. Additionally, the predictive tree encoder and the arithmetic coder in FIG. 19 may encode the geometry in the coded order according to the generated predictive tree and generate a geometry bitstream.

The encoding the attribute may include predicting the attribute based on the generated predictive tree generated while encoding the geometry.

The encoding the attribute may further include checking the predictive tree, and the predictive tree may or may not be changed based on the check. In other words, the generated predictive tree while encoding the geometry may be checked. If the predictive tree is suitable, the predictive tree may be used without change, and if not, the predictive tree may be changed.

In this case, the checking the predictive tree may further include determining whether a predictive value of the attribute calculated based on the predictive tree is suitable and changing the predictive tree if the predictive value is not suitable. The check and change of the predictive tree are described with reference to FIG. 17.

Referring to FIG. 17, the changing the predictive tree may include calculating attribute threshold information based on geometry threshold information, attribute precision information, and geometry precision information and changing the predictive tree based on the attribute threshold information.

The encoding the attribute may further include rearranging the coded order of the geometry. In this case, the rearranging the coded order is performed based on at least one of an azimuth, a radius, an elevation, or a laserID value of the geometry.

The geometry coded order processor 1910 of FIG. 19 may rearrange the coded order of the geometry.

The predictive tree referenced while encoding the attribute may be generated based on the geometry of a previous frame. That is, when encoding the attribute of a current frame, the predictive tree may use a predictive tree generated using the geometry of the previous frame.

In the transmitting the bitstream including the point cloud data (S2710), the bitstream includes information as to whether the predictive tree of the geometry is used while encoding the attribute. For example, the information as to whether the predictive tree of the geometry is used while encoding the attribute may be transmitted through use_predictive_tree_in_attribute_flag in FIG. 22.

In addition, the bitstream may include information as to whether the attribute is predicted based on the previous frame while encoding the attribute. For example, since reference frame_predictor_use flag in FIG. 22 indicates whether a predictor is generated from a reference frame, the bitstream may indicate whether the attribute is predicted based on the previous frame while encoding the attribute.

The point cloud data transmission method according to the embodiments may use the geometry predictive tree without change or use the geometry predictive tree through change while encoding the attribute. In addition, the coded order of the geometry may be used without change or may be rearranged. The referenced predictive tree of the geometry may be the predictive tree generated from the previous frame (or reference frame), and the predictor may be generated and the attribute may be predicted based on the predictive tree, thereby increasing the speed and efficiency of compression.

The transmission device according to the embodiments may include an encoder that encodes point cloud data and a transmitter that transmits a bitstream including the point cloud data. Components of the transmission device according to the embodiments may be a processor, a module, a circuit, software, or a combination thereof, which performs each process of the transmission method according to the embodiments, and may be named in various ways.

FIG. 28 is a flowchart illustrating a cloud data reception method according to embodiments.

The point cloud data reception method according to the embodiments may be implemented by the reception device in FIG. 1, the reception method in FIG. 2, the point cloud decoders of FIGS. 10 and 11, the reception device of FIG. 13, the devices in FIG. 14, the decoding process in FIG. 19, and/or hardware including one or more processors or integrated circuits configured to communicate with one or more memories, software, firmware, or a combination of hardware, software, and firmware.

The reception method according to the embodiments may correspond to a reverse process corresponding to the transmission method.

Referring to FIG. 28, the receiving method according to the embodiments may include receiving a bitstream including point cloud data (S2800) and decoding the point cloud data (S2810).

The decoding the point cloud data (S2800) includes decoding a geometry and decoding an attribute.

The decoding the geometry may include generating a predictive tree using the geometry and decoding the geometry in a coded order according to the predictive tree.

The decoding the attribute includes predicting the attribute based on the predictive tree. In this case, the predictive tree may be a predictive tree generated when decoding the geometry of a previous frame (or reference frame).

The decoding the attribute may further include rearranging the coded order of the geometry, and the rearranging the coded order may be performed based on at least one of an azimuth, a radius, an elevation, or a laserID value of the geometry.

Referring to FIG. 20, the geometry coded order processor 2010 may rearrange the coded order of the geometry.

In the receiving the bitstream including the point cloud data (S2800), the bitstream includes information as to whether the predictive tree of the geometry is used while decoding the attribute. For example, the information as to whether the predictive tree of the geometry is used may be transmitted through use_predictive_tree_in_attribute_flag in FIG. 22 while decoding the attribute.

In addition, the bitstream may include information as to whether the attribute is predicted based on the previous frame while encoding the attribute. For example, since reference frame_predictor_use flag in FIG. 22 indicates whether a predictor is generated from a reference frame, the bitstream may indicate whether the attribute is predicted based on the previous frame while encoding the attribute.

Additionally, the bitstream may include information as to whether the coded order of the geometry is equally used. For example, use_geometry_coded_order_flag in FIG. 22 may indicate whether the coded order of the geometry is used without change while encoding attribute information.

Additionally, the bitstream may include information as to whether a predictor for predicting the attribute is calculated from a point belonging to a previous frame. For example, make_predictor in FIG. 22 indicates information about conditions for generating the predictor. If make_predictor is 5, the predictor is selected as a point with the most similar geometry value in the previous frame (or reference frame). Therefore, make_predictor may indicate whether the predictor is calculated from the point belonging to the previous frame.

The reception device according to the embodiments may include a receiver that receives a bitstream including point cloud data and a decoder that decodes the point cloud data. Components of the reception device according to the embodiments may be a processor, a module, a circuit, software, or a combination thereof, which performs each process of the reception method according to the embodiments, and may be named in various ways.

The embodiments support point-by-point attribute coding among point cloud compression functions and are efficient for low-latency attribute coding, inter-frame coding, and parallel coding. Attribute coding according to embodiments supports attribute compression using a geometry predictive tree. In addition, a geometry may be decoded in real time and an attribute may be decoded in real time. Further, an encoding/decoding time may be reduced by an inter-frame attribute encoding method and an attribute decoding method using geometry information.

The process of the transmission and reception device according to the above-described embodiments may be performed in combination of point cloud compression processing. The operations according to the embodiments described herein may be performed by a transmission and reception device including a memory and/or a processor according to embodiments. The memory may store programs for processing/controlling the operations according to the embodiments. The processor may control the various operations described herein. The processor may be referred to as a controller or the like. The operations of the embodiments may be performed by firmware, software, and/or a combination thereof, and the firmware, the software, and/or the combination thereof may be stored in the processor or stored in the memory.

The operations according to the embodiments described herein may be performed by a transmission and reception device including a memory and/or a processor according to embodiments. The memory may store programs for processing/controlling the operations according to the embodiments. The processor may control the various operations described in the present disclosure. The processor may be referred to as a controller or the like. The operations of the embodiments may be performed by firmware, software, and/or a combination thereof, and the firmware, the software, and/or the combination thereof may be stored in the processor or stored in the memory.

Embodiments have been described from the method and/or device perspective, and descriptions of methods and devices may be applied so as to complement each other.

Although the accompanying drawings have been described separately for simplicity, it is possible to design new embodiments by merging the embodiments illustrated in the respective drawings. Designing a recording medium readable by a computer on which programs for executing the above-described embodiments are recorded as needed by those skilled in the art also falls within the scope of the appended claims and their equivalents. The devices and methods according to embodiments may not be limited by the configurations and methods of the embodiments described above. Various modifications can be made to the embodiments by selectively combining all or some of the embodiments. Although preferred embodiments have been described with reference to the drawings, those skilled in the art will appreciate that various modifications and variations may be made in the embodiments without departing from the spirit or scope of the disclosure described in the appended claims. Such modifications are not to be understood individually from the technical idea or perspective of the embodiments.

Various elements of the devices of the embodiments may be implemented by hardware, software, firmware, or a combination thereof. Various elements in the embodiments may be implemented by a single chip, for example, a single hardware circuit. According to embodiments, the components according to the embodiments may be implemented as separate chips, respectively. According to embodiments, at least one or more of the components of the device according to the embodiments may include one or more processors capable of executing one or more programs. The one or more programs may perform any one or more of the operations/methods according to the embodiments or include instructions for performing the same.

Executable instructions for performing the method/operations of the device according to the embodiments may be stored in a non-transitory CRM or other computer program products configured to be executed by one or more processors, or may be stored in a transitory CRM or other computer program products configured to be executed by one or more processors.

In addition, the memory according to the embodiments may be used as a concept covering not only volatile memories (e.g., RAM) but also nonvolatile memories, flash memories, and PROMs. In addition, it may also be implemented in the form of a carrier wave, such as transmission over the Internet. In addition, the processor-readable recording medium may be distributed to computer systems connected over a network such that the processor-readable code may be stored and executed in a distributed fashion.

In this specification, the term "/" and "," should be interpreted as indicating "and/or." For instance, the expression "A/B" may mean "A and/or B." Further, "A, B" may mean "A and/or B." Further, "A/B/C" may mean "at least one of A, B, and/or C." Also, "A/B/C" may mean "at least one of A, B, and/or C." Further, in this specification, the term "or" should be interpreted as indicating "and/or." For instance, the expression "A or B" may mean 1) only A, 2) only B, or 3) both A and B. In other words, the term "or" used in this document should be interpreted as indicating "additionally or alternatively."

Terms such as first and second may be used to describe various elements of the embodiments. However, various components according to the embodiments should not be limited by the above terms. These terms are only used to distinguish one element from another. For example, a first user input signal may be referred to as a second user input signal. Similarly, the second user input signal may be referred to as a first user input signal. Use of these terms should be construed as not departing from the scope of the various embodiments. The first user input signal and the second user input signal are both user input signals, but do not mean the same user input signals unless context clearly dictates otherwise.

The terms used to describe the embodiments are used for the purpose of describing specific embodiments, and are not intended to limit the embodiments. As used in the description of the embodiments and in the claims, the singular forms "a", "an", and "the" include plural referents unless the context clearly dictates otherwise. The expression "and/or" is used to include all possible combinations of terms. The terms such as "includes" or "has" are intended to indicate existence of figures, numbers, steps, elements, and/or components and should be understood as not precluding possibility of existence of additional existence of figures, numbers, steps, elements, and/or components. As used herein, conditional expressions such as "if" and "when" are not limited to an optional case and are intended to be interpreted, when a specific condition is satisfied, to perform the related operation or interpret the related definition according to the specific condition.

Operations according to the embodiments described in this specification may be performed by a transmission/reception device including a memory and/or a processor according to embodiments. The memory may store programs for processing/controlling the operations according to the embodiments, and the processor may control various operations described in this specification. The processor may be referred to as a controller or the like. In embodiments, operations may be performed by firmware, software, and/or a combination thereof. The firmware, software, and/or a combination thereof may be stored in the processor or the memory.

The operations according to the above-described embodiments may be performed by the transmission device and/or the reception device according to the embodiments. The transmission/reception device includes a transmitter/receiver configured to transmit and receive media data, a memory configured to store instructions (program code, algorithms, flowcharts and/or data) for a process according to embodiments, and a processor configured to control operations of the transmission/reception device.

The processor may be referred to as a controller or the like, and may correspond to, for example, hardware, software, and/or a combination thereof. The operations according to the above-described embodiments may be performed by the processor. In addition, the processor may be implemented as an encoder/decoder for the operations of the above-described embodiments.

**Mode for Disclosure**

As described above, related contents have been described in the best mode for carrying out the embodiments.

**Industrial Applicability**

As described above, the embodiments may be fully or partially applied to the point cloud data transmission/reception device and system. It will be apparent to those skilled in the art that variously changes or modifications can be made to the embodiments within the scope of the embodiments. Thus, it is intended that the embodiments cover the modifications and variations of this disclosure provided they come within the scope of the appended claims and their equivalents.

**Claims**

1. A method of transmitting point cloud data, the method comprising:

    encoding the point cloud data; and
    transmitting a bitstream including the point cloud data.

2. The method of claim 1,

    wherein the encoding the point cloud data includes encoding a geometry and encoding an attribute,
    wherein the encoding the geometry includes generating a predictive tree using the geometry and encoding the geometry in a coded order according to the predictive tree, and
    wherein the encoding the attribute includes predicting the attribute based on the predictive tree.

3. The method of claim 2, wherein the encoding the attribute further includes checking the predictive tree, and wherein the predictive tree is changed or is not changed based on the check.

4. The method of claim 3, wherein the checking the predictive tree further includes:

    determining whether a predictive value of the attribute calculated based on the predictive tree is suitable; and
    changing the predictive tree based on the predictive value being unsuitable.

5. The method of claim 4, wherein the changing the predictive tree includes:

    calculating attribute threshold information based on geometry threshold information, attribute precision information, and geometry precision information; and
    changing the predictive tree based on the attribute threshold information.

6. The method of claim 2, wherein the encoding the attribute further includes rearranging the coded order of the geometry, and
    wherein the rearranging the coded order is performed based on at least one of an azimuth, a radius, an elevation, or a laser ID (laserID) value of the geometry.

7. The method of claim 2, wherein the predictive tree is generated based on the geometry of a previously processed frame.

8. The method of claim 5, wherein the bitstream includes information as to whether the predictive tree of the geometry is used while encoding the attribute.

9. The method of claim 7, wherein the bitstream includes information as to whether the attribute is predicted based on the previously processed frame while encoding the attribute.

10. A device for transmitting point cloud data, the device comprising:

    an encoder configured to encode the point cloud data; and
    a transmitter configured to transmit a bitstream including the point cloud data.

11. A method of receiving point cloud data, the method comprising:

    receiving a bitstream including the point cloud data; and
    decoding the point cloud data.

12. The method of claim 11,

    wherein the decoding the point cloud data includes decoding a geometry and decoding an attribute,
    wherein the decoding the geometry includes generating a predictive tree using the geometry and decoding the geometry in a coded order according to the predictive tree, and
    wherein the decoding the attribute includes predicting the attribute based on the predictive tree.

13. The method of claim 12, wherein the decoding the attribute further includes rearranging the coded order of the geometry, and
wherein the rearranging the coded order is performed based on at least one of an azimuth, a radius, an elevation, or a laser ID (laserID) value of the geometry.

14. The method of claim 12, wherein the predictive tree is generated based on the geometry of a previously processed frame.

15. The method of claim 12, wherein the bitstream includes information as to whether the predictive tree of the geometry is used while decoding the attribute.

16. The method of claim 13, wherein the bitstream includes information as to whether the coded order of the geometry is equally used.

17. The method of claim 12, wherein the bitstream includes information as to whether a predictor for predicting the attribute is calculated from a point belonging to a previously processed frame.

18. A device for receiving point cloud data, the device comprising:

a receiver configured to receive a bitstream including the point cloud data; and
a decoder configured to decode the point cloud data.

# FIG. 1

FIG. 2

EP 4 432 657 A1

FIG. 3

# FIG. 4

FIG. 5

FIG. 6

## FIG. 7

$$1 + 2 + 4 + 8 = 15$$

FIG. 8

Level of details

## FIG. 9

| Original order | P0, P1, P2, P3, P4, P5, P6, P7, P8, P9 |
|---|---|
| LOD-based order | P0, P5, P4, P2 \| P1, P6, P3 \| P9, P8, P7 |

LOD0

LOD1

LOD2

# FIG. 10

# FIG. 11

geomerty bitstream

attributes birsrteam

11000 — Arithmerix decode

11005 — Arithmerix decode

11001 — Synthesize octree

11006 — Inverse quantize

11002 — synthesize surface approximation

11007

11003 — Reconstruct geometry

RAHT

11008 — Gnnerate LOD

11009 — Inverse lifring

11004 — Inverse transform coordinates

11010 — Inverse transform colors

position

attributes

FIG. 12

FIG. 13

| | | |
|---|---|---|
| 13000 | Receiver | |
| 13001 | Reception processor | 13006 |

Geometry bitstream

Set value, etc.

Attribute bitstream

| 13002 | Arithmetic decoder | Metadata parser | Arithmetic decoder | 13007 |
|---|---|---|---|---|

| 13003 | Occupancy code-based octree reconstruction processor | Inverse quantization processor | 13008 |
|---|---|---|---|

| 13004 | Surface model processor (triangle reconstruction, up-sampling, voxelization) | Prediction /lifting/RAHT inverse transform processor | 13009 |
|---|---|---|---|

| 13005 | Inverse quantization processor | Color inverse transform processor | 13010 |
|---|---|---|---|

Sharing reconstructed position values

| | Renderer | 13011 |
|---|---|---|

FIG. 14

# FIG. 15

ply       Rearranged Ply       Generation of predictive tree structure       coding order

EP 4 432 657 A1

# FIG. 16

1650
1640
1630
Additional Inter Pred Point
Inter Pred Point
Ref Point with same scaled azimuth and laserID
Reference Frame

1610
1620
Curr Point
Prev Dec Point
Current Frame

# FIG. 17

Geometry n-tree structure     ⟶     Attribute m-tree structure

# FIG. 18

1. Encoding of geometry predictive tree ⟶ (Attribute coding preparation) ⟶ 2. Encoding of attribute

1-1. Predictive tree
reference frame is encoded

1-2. Predictive tree of
current frame is encoded

(1). Method of selecting condition using
geometry predictive tree information

(2) Determination regarding whether
to maintain geometry coded order
(reuse_flag) vs arrangement of
attribute predictive tree order
using other arrangement methods

2-1. Method of checking suitability of mode

2-2. Method of transmitting difference value
value according to suitability of mode

2-3. Condition when performing inter-frame attribute compression

2-4. Method of applying transformation to difference value

# FIG. 19

Data Input Unit

Position values of points of reference frame and position values of points of current frame

Attribute values of points of reference frame and attribute values of points of current frame

1910

Coordinate Transformer

Quantization/Voxelization Processor

Predictive Tree Generator

Predictive Tree Encoder

Geometry Reconstructor of Reference and Current Frames

Geometry Coded Order Processor

Color Transform Processor

Attribute Transform Processor

Predictor Generator — 1920

Intra-Frame/Inter-Frame Mode Suitability Determiner — 1930

Difference Value Transmitter According to Mode Suitability — 1940

Arithmetic Coder

Geometry bitstream

Arithmetic Coder

Attribute bitstream

# FIG. 20

Receiver

Geometry bitstream

Attribute bitstream

2010

Arithmetic Decoder

Arithmetic Decoder

Predictive Tree-based
Reconstruction Processor

Inverse Quantization Processor

Geometry Coded Order Processor

Surface Model Processor
(Triangle Reconstruction,
Up-Sampling, Voxelization)

Predictor Generator ~2020

Geometry Reconstructor of
Reference and Current Frames

Intra-Frame/Inter-Frame Mode
and Different Value Calculator ~2030

Coordinate Inverse Transformer

Color Inverse Transform Processor

Position values of
points of current frame

Attribute values of points of current frame

## FIG. 21

slice 0          slice n

| SPS | GPS | $APS_0$ | $APS_1$ | TPS | $Geom_0^0$ | $Attr_0^0$ | $Attr_1^0$ | $\cdots$ | $Geom_0^n$ | $Attr_0^n$ | $Attr_1^n$ |

Geom_slice_header | Geom_slice_data

{
Tile(0).tile_bounding_box_xyz0;
Tile(0).tile_bounding_box_whd;
......
Tile(n).tile_bounding_box_xyz0;
Tile(n).tile_bounding_box_whd;
}

{
geom_ geom_ parameter_set_id;
geom_tile_id;
geom_slice_id;
geomBoxOrigin;
geom_box_log2_scale;
geom_max_node_size_log2;
geom_num_points;
}

EP 4 432 657 A1

# FIG. 22

| seq_parameter_set_rbsp( ) { | Descriptor |
|---|---|
| ... | |
| use_predictive_tree_in_attribute_flag | u(1) |
| use_geometry_coded_order_flag | u(1) |
| if(use_predictive_tree_in_attribute_flag) { | |
| predictor_distortion_ratio_threshold | ue(v) |
| make_predictor | ue(v) |
| reference_frame_predictor_use_flag | u(1) |
| } | |
| ... | |
| } | |

# FIG. 23

| tile_parameter_set( ) { | Descriptor |
|---|---|
| num_tiles | ue(v) |
| for( i = 0; i < num_tiles; i++ ) { | |
| tile_bounding_box_offset_x[ i ] | se(v) |
| tile_bounding_box_offset_y[ i ] | se(v) |
| tile_bounding_box_offset_z[ i ] | se(v) |
| tile_bounding_box_scale_factor[ i ] | ue(v) |
| tile_bounding_box_size_width[ i ] | ue(v) |
| tile_bounding_box_size_height[ i ] | ue(v) |
| } | |
| use_predictive_tree_in_attribute_flag | u(1) |
| use_geometry_coded_order_flag | u(1) |
| if(use_predictive_tree_in_attribute_flag) { | |
| predictor_distortion_ratio_threshold | ue(v) |
| make_predictor | ue(v) |
| reference_frame_predictor_use_flag | u(1) |
| } | |
| } | |

# FIG. 24

| geometry_parameter_set( ) { | Descriptor |
|---|---|
| ... | ue(v) |
| use_predictive_tree_in_attribute_flag | u(1) |
| use_geometry_coded_order_flag | u(1) |
| if(use_predictive_tree_in_attribute_flag) { | |
| predictor_distortion_ratio_threshold | ue(v) |
| make_predictor | ue(v) |
| reference_frame_predictor_use_flag | u(1) |
| } | |
| ... | |
| } | |

# FIG. 25

| attribute_parameter_set( ) { | Descriptor |
|---|---|
| ... | |
| use_predictive_tree_in_attribute_flag | u(1) |
| use_geometry_coded_order_flag | u(1) |
| if(use_predictive_tree_in_attribute_flag) { | |
| predictor_distortion_ratio_threshold | ue(v) |
| make_predictor | ue(v) |
| reference_frame_predictor_use_flag | u(1) |
| } | |
| ... | |
| } | |

# FIG. 26

| geometry_slice_header( ) { | Descriptor |
|---|---|
| ... | |
| use_predictive_tree_in_attribute_flag | u(1) |
| use_geometry_coded_order_flag | u(1) |
| if(use_predictive_tree_in_attribute_flag) { | |
| predictor_distortion_ratio_threshold | ue(v) |
| make_predictor | ue(v) |
| reference_frame_predictor_use_flag | u(1) |
| } | |
| ... | |
| } | |

# FIG. 27

| | |
|---|---|
| Encode point cloud data | S2700 |

| | |
|---|---|
| Transmit bitstream including point cloud data | S2710 |

# FIG. 28

| | |
|---|---|
| Receive bitstream including point cloud data | ∽ S2800 |

↓

| | |
|---|---|
| Decoding point cloud data | ∽ S2810 |

| | INTERNATIONAL SEARCH REPORT | International application No. |
|---|---|---|
| | | **PCT/KR2022/017416** |

**A.  CLASSIFICATION OF SUBJECT MATTER**

**H04N 19/597**(2014.01)i; **H04N 19/54**(2014.01)i; **H04N 19/96**(2014.01)i; **H04N 19/44**(2014.01)i; **H04N 19/107**(2014.01)i; **H04N 19/70**(2014.01)i

According to International Patent Classification (IPC) or to both national classification and IPC

**B.  FIELDS SEARCHED**

Minimum documentation searched (classification system followed by classification symbols)

H04N 19/597(2014.01); G06T 9/00(2006.01); G06T 9/40(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 포인트 클라우드(point cloud), 지오메트리(geometry), 어트리뷰트(attribute), 예측트리(predictive tree), 순서(order), 검사(test)

**C.  DOCUMENTS CONSIDERED TO BE RELEVANT**

| Category* | Citation of document, with indication, where appropriate, of the relevant passages | Relevant to claim No. |
|---|---|---|
| X | WO 2021-215811 A1 (LG ELECTRONICS INC.) 28 October 2021 (2021-10-28)<br>See paragraphs [0270]-[0274]; and claims 1, 3 and 12. | 1-2,10-12,15,18 |
| Y | | 3-4,6-7,9,13-14,16-17 |
| A | | 5,8 |
| Y | US 2021-0104075 A1 (APPLE INC.) 08 April 2021 (2021-04-08)<br>See paragraphs [0055] and [0068]; claim 16; and figures 4 and 7A. | 3-4,7,9,14,17 |
| Y | WO 2021-201384 A1 (LG ELECTRONICS INC.) 07 October 2021.<br>See paragraph [0224]; and figure 4. | 6,13,16 |
| A | WO 2021-193899 A1 (PANASONIC INTELLECTUAL PROPERTY CORPORATION OF AMERICA) 30 September 2021.<br>See paragraphs [0009]-[0010]; and claims 1-6. | 1-18 |

☑ Further documents are listed in the continuation of Box C.    ☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **21 February 2023** | **22 February 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2022/017416**

**C.        DOCUMENTS CONSIDERED TO BE RELEVANT**

| Category* | Citation of document, with indication, where appropriate, of the relevant passages | Relevant to claim No. |
|---|---|---|
| A | WO 2021-084295 A1 (BLACKBERRY LIMITED et al.) 06 May 2021 (2021-05-06) See paragraphs [0026]-[0045]; and claims 1-11. | 1-18 |

Form PCT/ISA/210 (second sheet) (July 2022)

**INTERNATIONAL SEARCH REPORT**
Information on patent family members

International application No.

**PCT/KR2022/017416**

| Patent document cited in search report | | | Publication date (day/month/year) | Patent family member(s) | | | Publication date (day/month/year) |
|---|---|---|---|---|---|---|---|
| WO | 2021-215811 | A1 | 28 October 2021 | None | | | |
| US | 2021-0104075 | A1 | 08 April 2021 | CN | 114556429 | A | 27 May 2022 |
| | | | | EP | 4022573 | A1 | 06 July 2022 |
| | | | | US | 11538196 | B2 | 27 December 2022 |
| | | | | WO | 2021-067869 | A1 | 08 April 2021 |
| WO | 2021-201384 | A1 | 07 October 2021 | None | | | |
| WO | 2021-193899 | A1 | 30 September 2021 | CN | 115335868 | A | 11 November 2022 |
| | | | | US | 2023-0005187 | A1 | 05 January 2023 |
| WO | 2021-084295 | A1 | 06 May 2021 | EP | 4052474 | A1 | 07 September 2022 |

Form PCT/ISA/210 (patent family annex) (July 2022)